(19) Europäisches Patentamt
European Patent Office
Office européen des brevets

(11) **EP 3 033 689 B1**

(12) **EUROPEAN PATENT SPECIFICATION**

(45) Date of publication and mention
of the grant of the patent:
**15.09.2021 Bulletin 2021/37**

(21) Application number: **14789086.7**

(22) Date of filing: **23.04.2014**

(51) Int Cl.:
**G06F 17/13** (2006.01)         **G01N 37/00** (2006.01)
**G01S 13/89** (2006.01)         **G01V 99/00** (2009.01)

(86) International application number:
**PCT/CA2014/000386**

(87) International publication number:
**WO 2014/172787 (30.10.2014 Gazette 2014/44)**

(54) **A PENALTY METHOD FOR PDE-CONSTRAINED OPTIMIZATION**

BESTRAFUNGSVERFAHREN FÜR PDE-EINGESCHRÄNKTE OPTIMIERUNG

PROCÉDÉ DE PÉNALITÉ POUR OPTIMISATION SOUS CONTRAINTE D'EDP

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.04.2013 US 201361815533 P**

(43) Date of publication of application:
**22.06.2016 Bulletin 2016/25**

(73) Proprietor: **The University of British Columbia
Vancouver, BC V6T 1Z4 (CA)**

(72) Inventors:
• **HERRMANN, Felix J.
Vancouver, BC V6K 1T5 (CA)**
• **VAN LEEUWEN, Tristan
Vancouver, BC V6T 1Z4 (CA)**

(74) Representative: **Cramwinckel, Michiel et al
Cramwinckel Consultancy
Kallenkoterallee 82 A
8331 AJ Steenwijk (NL)**

(56) References cited:
**WO-A1-2013/012470**

• **GASSAN S ABDOULAEV ET AL: "Optical
tomography as a PDE-constrained optimization
problem; Optical tomography as a
PDE-constrained optimization problem",
INVERSE PROBLEMS, INSTITUTE OF PHYSICS
PUBLISHING, BRISTOL, GB, vol. 21, no. 5, 1
October 2005 (2005-10-01), pages 1507-1530,
XP020086302, ISSN: 0266-5611, DOI:
10.1088/0266-5611/21/5/002**
• **E HARBER: "Preconditioned all-at-once methods
for large, sparse parameter estimation
problems", INVERSE PROBLEMS, vol. 17, no. 6,
15 November 2001 (2001-11-15), pages
1847-1864, XP055294097,**
• **T. VAN LEEUWEN ET AL: "Mitigating local
minima in full-waveform inversion by expanding
the search space", GEOPHYSICAL JOURNAL
INTERNATIONAL., vol. 195, no. 1, 30 July 2013
(2013-07-30) , pages 661-667, XP055364425, GB
ISSN: 0956-540X, DOI: 10.1093/gji/ggt258**
• **VAN LEEUWEN, T. ET AL.: 'Mitigating local
minima in full-waveform inversion by expanding
the search space', [Online] 25 April 2013, pages
1 - 12, XP055294052 Retrieved from the Internet:
<URL:HTTPS://WWW.SLIM.EOS.UBC.CA/PUBLI
CATIO
NS/PUBLIC/JOURNALS/GEOPHYSICALJOURN
ALINTERN
ATIONAL/2013/VANLEEUWEN2013GJIMLM/VAN
LEEUWE N2013MLM.PDF> [retrieved on
2014-08-21]**

EP 3 033 689 B1

**(Cont. next page)**

- **PETERS, B. ET AL.: 'Wave-equation based inversion with the penalty method: adjoint-state versus wavefield-reconstruction inversion' 76TH EAGE CONFERENCE & EXHIBITION 2014 16 June 2014, AMSTERDAM , THE NETHERLANDS, pages 1 - 5, XP055294048 Retrieved from the Internet: <URL:htlps://www.slim.eos.ubc.ca/Publicatio ns/Public/Conferences/EAGE/2014/peters2014E AGEw eb/peters2014EAGEweb_pres.pdf> [retrieved on 2014-08-21]**
- **VAN LEEUWEN, T, [Online] 01 January 2013, pages 1 - 59, XP055294059 Retrieved from the Internet: <URL:HTTPS://WWW.SLIM.EOS.UBC.CA/PUBLI CATIO NS/PUBLIC/CONFERENCES/SEG/2013/HERRM ANN2013 SEGPMC/HERRMANN2013SEGPMC_PRES.PDF > [retrieved on 2014-08-21]**
- **PETERS, B. ET AL.: 'Wave-equation based inversion with the penalty method: adjoint-state versus wavefield-reconstruction inversion' 76TH EAGE CONFERENCE & EXHIBITION 2014, [Online] 16 June 2014, pages 1 - 27, XP055294125 Retrieved from the Internet: <URL:HTTPS://WWW.SLIM.EOS.UBC.CA/PUBLI CATIO NS/PUBLIC/CONFERENCES/EAGE/2014/PETER S2014E AGEWEB/PETERS2014EAGEWEB_PRES.PDF> [retrieved on 2014-08-21]**
- **HABER, E. ET AL.: 'PRECONDITIONED ALL-AT-ONCE METHODS FOR LARGE, SPARSE PARAMETER ESTIMATION PROBLEMS' INVERSE PROBLEMS vol. 17, no. 6, 15 November 2001, pages 1847 - 1864, XP055294097**
- **HABER, E. ET AL.: 'On Optimization Techniques for Solving Nonlinear Inverse Problems' INVERSE PROBLEMS vol. 16, no. 5, 01 January 2000, pages 1263 - 1280, XP055294102**

**Description**

**CROSS REFERENCE TO RELATED APPLICATION**

This application claims priority from U.S. Provisional Application Serial No. 61/815,533, filed 24 April 2013.

**FIELD OF THE INVENTION**

The invention relates to a partial-differential-equation (PDE) constrained optimization method and especially to a partial-differential-equation (PDE) constrained optimization method for geophysical prospecting.

**BACKGROUND OF THE INVENTION**

Partial-differential-equation (PDE) based inversion methods aim to find estimates of unknown physical model parameters. For example in geophysical prospecting compressional wavespeeds from partial measurements of a subsurface formation is used. By finding solutions of a partial differential equation which best explain the observed data subject to constraints imposed by e.g. the physics and the geology one can obtain a model. The model can be used to image the subsurface formation and provide valuable information regarding for example the presence of oil or gas reserves.

There exists a wide body of literature on these methods that fall into one or more of the following categories:

- PDE-constrained optimization formulations (hereafter referred to as the constrained formulation) where the data misfit is minimized subject to PDE constraints (Eldad Haber, Ascher, and Oldenburg 2000). Solutions of the PDE and physical model parameters are simultaneously updated in these approaches that involve the solution of large sparse systems of equations also known as KKT systems. Because this method updates the physical model parameters as well as the forward and adjoint fields at each iteration, it requires concurrent access to these fields for all sources, i.e., right-hand sides of the PDE. This leads to infeasible demands on storage for large-scale applications, such as 3D seismic inversion, which consists of many source experiments with a large number of measurements.

- Unconstrained or reduced formulations as described by Haber, Eldad, Uri M. Ascher, and Doug Oldenburg. 2000. "On optimization techniques for solving nonlinear inverse problems." Inverse Problems 16 (5) (oct): 1263-1280. doi:10.1088/0266-5611/16/5/309 are hereafter referred to as the reduced formulation. In the reduced formulation the PDE constraint is eliminated by solving the PDE. This method requires for each iteration solutions of the forward and adjoint systems as explained by Tarantola, A., and A. Valette. 1982. "Generalized nonlinear inverse problems solved using the least squares criterion." Reviews of Geophysics and Space Physics 20 (2): 129-232 and by Plessix, R.-E. 2006. "A review of the adjoint-state method for computing the gradient of a functional with geophysical applications." Geophysical Journal International 167 (2): 495-503. As opposed to the constrained formulations, the Jacobian and (Gauss-Newton) Hessian are dense and their application requires additional PDE solves. However, the gradients and Hessian are built up source by source and do not require storage of the fields for all sources for each model update making this a practical method for large/complex industrial applications.

- The equation-error approach as described by Richter, R. G. 1981. "Numerical Identification of a Spatially Varying Diffusion Coefficient." Mathematics of Computation 36 (154): 375-386, which requires complete measurements of the field in the region of interest and uses the PDE, the source terms and the measured field to setup a system of (non)linear equations for the physical model parameters.

- Iterative fixed-point series methods as described by Weglein, Arthur B., Fernanda V. Araújo, Paulo M. Carvalho, Robert H. Stolt, Kenneth H. Matson, Richard T. Coates, Dennis Corrigan, Douglas J. Foster, Simon A. Shaw, and Haiyan Zhang. 2003. "Inverse scattering series and seismic exploration." Inverse Problems 19 (6) (dec): R27-R83. doi:10.1088/0266-5611/19/6/R01, during which physical model parameters are estimated by expanding the forward model into a series with different order contributions. Iterations in this case, correspond to including higher order terms in the expansion.

- Iterative fixed-point contrast-source formulation as described by van den Berg, P. M., and R. E. Kleinman. 1997. "A contrast source inversion method." Inverse Problems 13 (6): 1620-1706, which involves alternating solves for sources and contrasts from the Lippmann-Schwinger equation and the data equations.

- Linearized inversions as described by Plessix, R.-E., and W. A. Mulder. 2004. "Frequency-domain finite-difference amplitude-preserving migration." Geophysical Journal International 157: 975-987, during which the initial simple physical model parameters with respect to which the linearization has been carried out are not updated. These methods correspond to a single gradient or Gauss-Newton step. These linearized algorithms minimize the mismatch between a fixed data residual and the linearized forward model using local derivative information. In cases where the initial simple physical model parameters are far from their true values, these linearized approaches do generally not lead to accurate estimates for the perturbation of physical model parameters with respect the initial physical model.

- Iterative global nonlinear inversions as described by Tarantola, Albert. 2005. *Inverse problem theory and methods for model parameter estimation*. Society for Industrial Mathematics, during which the physical model parameters are estimated by means of a global search amongst all possible parameter combinations that best explain the observed data according to some data-misfit functional. Examples of these methods include Monte-Carlo methods, genetic algorithms, and simulated annealing. The costs of PDE solves are generally too high to warrant these approaches viable for physical models with high-dimensional parameterizations.

Gassan S Abdoulaev et al "Optical tomography as a PDE-constrained optimization problem", Inverse Problems, vol. 21, no. 5, October 2005 (2005-10-01), pages 1507-1530, XP020086302,ISSN: 0266-5611 describes a computer-implemented method in medical imaging.

The two most widely used and practical methods for large-scale problems are the constrained and reduced formulations, both of which have their advantages and disadvantages.

An advantage of the constrained formulation is that the forward and adjoint PDEs never need to be solved explicitly, as the forward and adjoint fields are updated simultaneously with the physical model parameters. A further advantage is that the search space for the optimization is much bigger than for the reduced method, possibly mitigating some of the problems that are ubiquitous in the reduced formulation such as local minima. A disadvantage of the constrained formulation is that it requires storing and updating of all fields.

An advantage of the reduced formulation is that the PDEs for all right-hand sides can be solved independently (and possibly in parallel) and the results can be aggregated in a running sum making the method applicable for large/complex industrial applications. Further the reduced formulation allows for integration into black-box nonlinear optimization schemed that only require misfit and derivative information such as the gradient. Disadvantages of the reduced formulation are that the PDEs need to be solved explicitly at each iteration and that the Jacobian and Hessian are dense and can only be applied in a matrix-free sense each requiring PDE solves. Furthermore because the PDE is eliminated, the search space for the optimization is reduced to the physical model parameters only, making the method more prone to get trapped in local minima.

When a partial-differential-equation constrained optimization method is used for geophysical prospecting of areas having a large geological complexity, simple background physical parameter models are usually unavailable. An iterative local nonlinear inversion based on the reduced formulation, known as full-waveform inversion (FWI), is then usually the method of choice. Practical application of this methodology is however hampered by:

- excessive computational and memory-storage costs exacerbated by the fact that these methods require several iterations that involve PDE solves. Dimensionality reduction techniques as described in WO2011160201 and by Haber, Eldad, Matthias Chung, and Felix Herrmann. 2012. "An Effective Method for Parameter Estimation with PDE Constraints with Multiple Right-Hand Sides." SIAM Journal on Optimization 22 (3) (jul): 739-757. doi:10.1137/11081126X can be used to bring these costs down. Dimensionality-reduction techniques include batching as described by Aravkin, Aleksandr, Michael P. Friedlander, Felix J. Herrmann, and Tristan Leeuwen. 2012. "Robust inversion, dimensionality reduction, and randomized sampling." Mathematical Programming 134 (1) (jun): 101-125. doi:10.1007/s10107-012-0571-6 and Gauss-Newton with compressive sensing as described by Li, X., A. Y. Aravkin, T. van Leeuwen, and F. J. Herrmann. 2012. "Fast randomized full-waveform inversion with compressive sensing." Geophysics 77 (3): A13. doi:10.1190/geo2011-0410.1, reduce the computational burden of FWI significantly, these methods require additional solutions of the forward and adjoint wave equations.

- local minima caused by cycle skipping, which occur when the kinematics of the predicted data for the current estimate of the physical model parameters differs by more than half a wavelength compared to the kinematics of the corresponding event in the observed data. Numerous techniques have been developed to mitigate this detrimental effect including (a) multiscale continuation methods where the inversions for the physical parameters are carried out by starting at the long wavelengths and using these parameter estimates as warm starts for inversions at the shorter wavelengths (Bunks, Carey. 1995. "Multiscale seismic waveform inversion." Geophysics 60 (5) (sep): 1457. doi:10.1190/1.1443880) and (b) offset and Laplace parameter continuations where the inversions for the physical parameters are carried out by starting at the small offsets and short time windows after the first arrival and using these parameter estimates as warm starts for inversions at larger offsets and over longer time windows (smaller Laplace parameters) (Pratt, G. R., Changsoo Shin, and G. J. Hicks. 1998. "Gauss-Newton and full Newton methods in frequency-space seismic waveform inversion." Geophysical Journal International 133 (2) (may): 341-362. doi:10.1046/j.1365-246X.1998.00498.x and Brossier, Romain, Stephane Operto, and Jean Virieux. 2009. "Seismic imaging of complex onshore structures by 2D elastic frequency-domain full-waveform inversion." GEOPHYSICS 74 (6) (nov): WCC105-WCC118. doi:10.1190/1.3215771). While the above solutions have been applied successfully, the effectiveness of these methods in practice is somewhat limited because of missing low frequencies, due to low signal-to-noise ratios at low frequencies and missing long offsets due to physical constraints such as finite cable lengths and cost considerations related to field-data acquisition.

The above may also be explained as follows. For PDEs where solutions are linearly related to the source function, PDE-constrained optimization takes the following mathematical form (E. Haber and Ascher 2001):

$$(1) \quad min_{\mathbf{m},\mathbf{u}} \sum_{i=1}^{M} \frac{1}{2} \parallel P_i \mathbf{u}_i - \mathbf{d}_i \parallel_2^2 \quad s.t. \quad A_i(\mathbf{m})\mathbf{u}_i = \mathbf{q}_i, \quad i = 1 \cdots M,$$

where

- $\mathbf{m} \in \mathbb{C}^N$ is a vector of length N with gridded medium parameters,
- $i = 1 \dots M$ is the experiment index with $M$ the number of experiments,
- $\mathbf{d}_i \in \mathbb{C}^K$ are the observed data with $K$ the number of samples,
- $A_i(\mathbf{m})$ is the system matrix,
- $\mathbf{q}_i \in \mathbb{C}^N$ represent the discretized source vectors,
- $\mathbf{u}_i \in \mathbb{C}^N$ are the corresponding discretized fields,
- $P_i$ is the detection operator for the $i^{th}$ source experiment.

Such constrained optimization problems can be solved by the Lagrangian as in Haber, E., and U. M. Ascher. 2001. "Preconditioned all-at-once methods for large, sparse parameter estimation problems." Inverse Problems 17 (6) (dec): 1847-1864. doi:10.1088/0266-5611/17/6/319.

$$(2) \quad L(\mathbf{m},\mathbf{u},\mathbf{v}) = \sum_{i=1}^{M} \frac{1}{2} \parallel P_i \mathbf{u}_i - \mathbf{d}_i \parallel_2^2 + \langle \mathbf{v}_i, A_i(\mathbf{m})\mathbf{u}_i - \mathbf{q}_i \rangle,$$

where $\mathbf{u} = [\mathbf{u}_1; \dots ; \mathbf{u}_M]$ collects the wavefields for each source experiment and $\mathbf{v} = [\mathbf{v}_1; \dots ; \mathbf{v}_M]$ are the Lagrange multipliers for each source experiment. Solving this optimization problem with a Newton-like method leads to the KKT system:

$$\begin{pmatrix} * & * & G^* \\ * & P^*P + * & A^* \\ G & A & 0 \end{pmatrix} \begin{pmatrix} \delta\mathbf{m} \\ \delta\mathbf{u} \\ \delta\mathbf{v} \end{pmatrix} = -\begin{pmatrix} G^*\mathbf{v} \\ A^*\mathbf{v} + P^*(P\mathbf{u} - \mathbf{d}) \\ A\mathbf{u} - \mathbf{q} \end{pmatrix},$$

where * denotes second-order terms, $A$ (and its conjugate transpose or adjoint $A^*$ is block diagonal matrix containing the matrices $A_i$ and similarly for $P$ and $G$, with

$$G_i(\mathbf{m},\mathbf{u}) = \frac{\partial A_i(\mathbf{m})\mathbf{u}_i}{\partial \mathbf{m}}.$$

The basic iterative algorithm to solve the constrained formulation consists of the following steps:

1. select appropriate initial guesses, $\mathbf{m}^0$, $\mathbf{u}_i^0$, $\mathbf{v}_i^0$ for all $i$,
2. solve the KKT system to obtain updates $\delta\mathbf{m}, \delta\mathbf{u}_i, \delta\mathbf{v}_i$, for all the experiments $i$,
3. determine a steplength $\alpha$,
4. update

$$\mathbf{m}^{k+1} = \mathbf{m}^k + \alpha\delta\mathbf{m}, \mathbf{u}_i^{k+1} = \mathbf{u}_i^k + \alpha\delta\mathbf{u}_i, \mathbf{v}_i^{k+1} = \mathbf{v}_i^k + \alpha\delta\mathbf{v}_i$$

for all $i$, and repeat steps 2-4 until a predetermined stopping criterion is met.

Because the method solves the forward and adjoint PDEs simultaneously, it eliminates the need to explicitly solve the forward and adjoint PDEs. The constrained formulation has the following advantages:

- as suggested by Asher and Haber (Ascher, Uri M., and Eldad Haber. 2005. "Computational Methods for Large Distributed Parameter Estimation Problems in 3D." In Modeling, Simulation and Optimization of Complex Processes, ed. HansGeorg Bock, HoangXuan Phu, Ekaterina Kostina, and Rolf Rannacher, 15-36. Springer Berlin Heidelberg) PDE-constrained formulations have the advantage that the PDEs do not need to be solved explicitly, and
- since constrained optimization methods search over a much larger solution space, there are reasons to believe that this formulation reduces the risk of the algorithm becoming trapped in a local minimum.

Unfortunately, constrained optimization methods are impractical for large-scale applications with many experiments (i.e., large $M$) because they need to store the forward and adjoint fields for each source. This means that each update requires access to all $2M$ fields, which prohibits its use for large-scale problems with many sources such as in the above referred to seismic applications.

The reduced formulation is based on the fact that it is found to be unfeasible to store and update all $2M$ fields as part of an iterative procedure (Epanomeritakis, I., V. Akçelik, O. Ghattas, and J. Bielak. 2008. "A Newton-CG method for large-scale three-dimensional elastic full-waveform seismic inversion." Inverse Problems 24 (3) (jun): 034015. doi:10.1088/0266-5611/24/3/034015). In view of this practical methods eliminate the PDE constraints in Equation (1), yielding the unconstrained or reduced formulation involving the minimization of the following misfit cost functional:

$$(3) \qquad min_{\mathbf{m}}\phi_{\text{red}}(\mathbf{m}) = \sum_{i=1}^{M} \frac{1}{2} \parallel P_i A_i(\mathbf{m})^{-1}\mathbf{q}_i - \mathbf{d}_i \parallel_2^2.$$

The gradient of this objective is given by

$$\nabla\phi_{red}(\mathbf{m}) = \sum_{i=1}^{M} G_i(\mathbf{m},\mathbf{u}_i)^*\mathbf{v}_i,$$

where

$$A_i(\mathbf{m})\mathbf{u}_i \quad = \quad \mathbf{q}_i$$

$$A_i(\mathbf{m})^*\mathbf{v} \quad = \quad -P_i^*(P_i\mathbf{u}_i - \mathbf{d}_i).$$

The Gauss-Newton Hessian is given by

$$H_{GN} = \sum_{i=1}^{M} G_i^* A_i^{-*} P_i^T P_i A_i^{-1} G_i,$$

which is a dense matrix. In practice, this matrix is never stored but its action is computed via additional PDE solves.

The basic iterative algorithm to solve the reduced formulation consists of the following steps:

1. select an appropriate initial guess $\mathbf{m}^0$,
2. solve the forward PDEs $A_i(\mathbf{m}^k)\mathbf{u}_i = \mathbf{q}_i$ for all $i$,
3. solve the adjoint PDEs $A_i(\mathbf{m}^k)^*\mathbf{v} = -P_i^*(P_i\mathbf{u}_i - \mathbf{d}_i)$ for all $i$,
4. compute the gradient $\mathbf{g} = \sum_{i=1}^{M} G_i(\mathbf{m}^k,\mathbf{u}_i)^*\mathbf{v}_i$ by aggregating the results from steps 2,3 over all $i$,
5. scale the gradient, for example with the inverse of the GN Hessian $\delta\mathbf{m} = -H_{GN}^{-1}\nabla\phi_{red}(\mathbf{m})$,
6. determine a steplength $\alpha$.
7. update $\mathbf{m}^{k+1} = \mathbf{m}^k + \alpha\delta\mathbf{m}$ and repeat steps 2-7 until a predetermined stopping criterion is met.

This reduced formulation requires explicit solves for the forward and adjoint PDEs to evaluate the objective and its gradient. Evaluation of the action of the Hessian requires additional PDE solves. However, the PDEs can be solved for all $i = 1 \ldots M$ sources separately possibly in parallel and without the need to store all $2M$ fields at any time.

The aim of the present invention is to provide a partial-differential-equation (PDE) constrained optimization method, especially suited for geophysical prospecting, but not limited to geophysical prospecting, which does not have the above-described disadvantages of the constrained and reduced formulations. More especially a method is aimed at that is less likely to stall and capable to work with large data volumes with many sources.

## SUMMARY OF THE INVENTION

This aim is achieved by the method defined by claim 1.

Applicants found that compared to the known all-at-once approaches to PDE-constrained optimization as discussed above, there is no need to update and store the fields for all sources leading to significant memory savings when the method according to the invention is used. For example when the method is used to obtain a model of a geological area by means of wave-equation based inversion it has been found that the method is able to solve the full-waveform inversion problem without the necessity to form adjoint wavefields. The method further avoids local minima and thus is less likely to stall. Further advantages and applications of the method according to the invention will be described below.

### Brief description of the drawings

Figure 1 is a schematic flow scheme of the method according to the invention.

Figure 2 is a flow scheme of a prior art FWI method.

Figure 3 is a flow scheme of a FWI method according to the invention.

Figure 4 shows an image representing the Square velocity perturbation embedded in constant background related to Example 1.

Figure 5 shows an image representing the Scattered wavefield for a point source corresponding to the model depicted in example1.

Figure 6 shows an image representing the Scattered wavefield obtained by solving for a constant velocity in Example 1.

Figure 7 shows an image representing the Estimate of model parameters in Example 1.

Fig. 8 shows an image representing the Velocity perturbation of Example 2.

Fig. 9 shows an image representing the Traditional reverse-time migration of Example 2.

Fig. 10 shows an image obtained by Example 2.

Fig. 11 shows an image representing the Misfit as a function of $v_0$ for the prior art and method according to the invention in Example 3.

Fig. 12 shows an image representing the Reconstructed velocity profiles after 1000 steepest descent iterations in Example 4.

Fig. 13 shows an image representing the Convergence histories in Example 4.

Fig. 14 shows an image representing the Data corresponding to the reconstructed velocity profiles in Example 4.

## DETAILED DESCRIPTION OF EMBODIMENTS

In the method according to the invention the following terms are used:
Physical model: a model of a physical entity, wherein the physical entity is described by physical properties that appear in PDE's that describe the response of this physical entity to an external excitation expressed by a source function. The physical entity may be for example a geological area, the earth's subsurface, atmospheric conditions, the human body.

Physical model parameters: parameters used in the model to describe the physical entity.

Partial-differential-equations (PDE's): a set of equations that describes the field resulting from an external excitation. For example when an acoustic excitation is applied the field is the wavefield and the PDE is the wave equation.

Discretized PDE: a system of equations obtained by discretizing the PDE with the method of finite differences, finite elements or by any other appropriate discretization method as to model the solution of the PDE in a computer.

System matrix: This is the part of discretized PDE that acts on the discretized field and that contains the physical model parameters.

PDE residue or Wave equation residual: a vector expressing the difference between the action of the system matrix, containing the discretized physical model parameters and spatio/temporal difference operators, on the field and the source function.

Field: solution of the PDE.

Source function: mathematical representation of the external excitation. A source function may for example be an impulsive source located at the surface and represented by a vector with all zeros except for a (complex) number at the location that corresponds to the source.

Observed data: physical measurements that are taken of the response of the physical entity to the external excitation.

Sampling operator: a linear operator that models the physical process of taking measurements, also referred to as acquisition or detection operator.

Source experiment or the $i^{th}$ source experiment represents the, $i^{th}$, experiment generally with different source locations and/or different source functions.

The terms cheap or low costs is used to characterize a feasible method, which can handle large industrial problems, requiring less, i.e. cheap, computer capacity, The term expensive or high costs is used to characterize a not-feasible method, which cannot handle large industrial problems, which would require unrealistic large and expensive computer capacity.

The method according to the present invention is a computationally efficient method of solving partial-differential-equation (PDE)-constrained optimization problems that occur in (geophysical) inversion problems and/or in other fields of use as described in this application. The method takes measured data from a physical system as input and minimizes an objective function that depends on an unknown model for the physical parameters, fields, and additional nuisance parameters. The objective function may be described by equation (4):

$$(4) \quad \phi_\lambda(\mathbf{m}, \mathbf{u}) = \sum_{i=1}^{M} \frac{1}{2} \parallel P_i \mathbf{u}_i - \mathbf{d}_i \parallel_2^2 + \frac{\lambda^2}{2} \parallel A_i(\mathbf{m})\mathbf{u}_i - \mathbf{q}_i \parallel_2^2.$$

parameterized by the physical model parameters **m**, wherein **m, u, d, q**, *M, i*, $A_i(\mathbf{m})$ and $P_i$ have the same meaning as defined for equation (2) and wherein A is a trade-off parameter and wherein the least-squares data-misfit term, $\parallel P_i \mathbf{u}_i - \mathbf{d}_i \parallel_2^2$, and the $\lambda$-weighted PDE-residual term, $\parallel A_i(\mathbf{m})\mathbf{u}_i - \mathbf{q}_i \parallel_2^2$, in equation (4) is a penalty objective function. For this reason the method according to the invention will also be referred to as the penalty method.

The invention consists of a minimization procedure involving a cost functional comprising of a data-misfit term and a penalty term that measures how accurately the fields satisfy the PDE. The method is composed of two alternating steps, namely the solution of a system of equations forming the discretization of the data-augmented PDE, and the solution of physical model parameters from the PDE itself given the field that solves the data-augmented system and an estimate for the sources.

Compared to the known all-at-once approaches to PDE-constrained optimization, there is no need to update and store the fields for all sources leading to significant memory savings. As in the all-at-once-approach, the proposed method explores a larger search space and is therefore less sensitive to initial estimates for the physical model parameters. Furthermore the method according to the invention solves the data-augmented PDE for the field in step (ii) making the method less prone to a cycle skip resulting in a trap at a local minimum. Contrary to the known reduced formulation, the method according to the invention does not require the solution of an adjoint PDE, effectively halving the number of PDE solves and memory requirement. As in the reduced formulation, fields can be computed independently and aggregated, possibly in parallel.

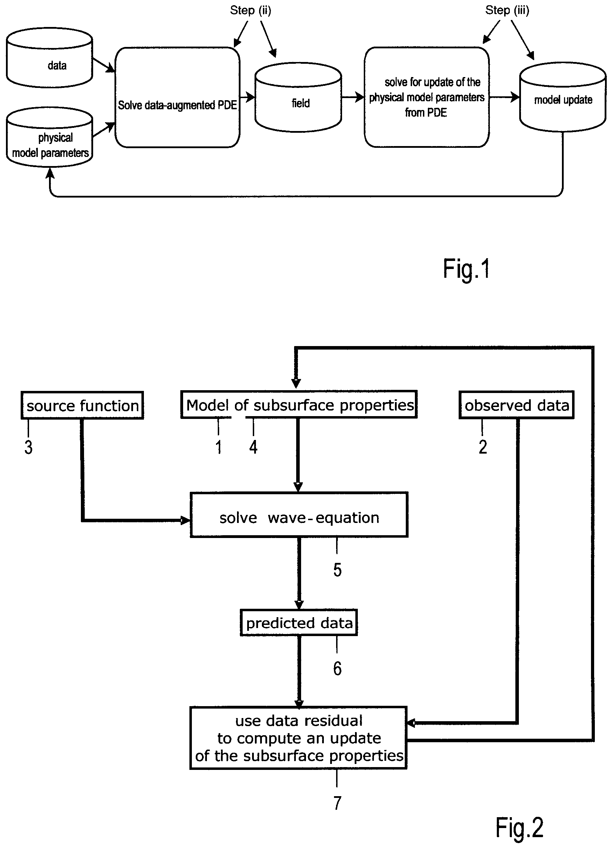

Reference will be made to Figure 1. The method according to the invention for determining the physical model parameters from measured data comprises the steps (i)-(iii).

In step (i) an initial model may be found by methods know to one skilled in the art. as for example velocity analysis and traveltime tomography.

In step (ii) a system of equations is set up for the field, comprising of the discretized PDE, the sampling operator, the source function and the observed data and solve the data-augmented PDE in a suitable manner to obtain a field that both satisfies the PDE and fits the data to some degree. Suitably a trade off parameter $\lambda$ is used in the process of balancing the data- and PDE-misfit terms. In other words step (ii) may be performed by minimization of Equation (4) with respect to the fields $\mathbf{u}_i$ by solving for each *i* the data-augmented PDE as defined in Equation (5) to obtain a field $\bar{\mathbf{u}}$ = $[\bar{\mathbf{u}}_{1; ...}; \bar{\mathbf{u}}_{M]}$,

$$(5) \quad \begin{pmatrix} \lambda A_i(\mathbf{m}) \\ P_i \end{pmatrix} \mathbf{u}_i = \begin{pmatrix} \lambda \mathbf{q}_i \\ \mathbf{d}_i \end{pmatrix}.$$

This data-augmented PDE can be interpreted as a regularized version of the original PDE forcing the field to fit the data while solving the PDE. Given these fields, a modified objective is defined, which solely depends on **m.**

In step (iii) a system of equations is set up by using the PDE, the source function and the field obtained in step (ii) and solve this system of equations in a suitable manner to obtain an update of the physical model parameters. The physical model paramaters may be updated subject to prior constraints.

Step (iii) may be performed by calculation of a gradient from a modified objective, defined in Equation (6). Note that the dependency of $\mathbf{u}_i$ on $\mathbf{m}$ does not appear in the gradient because $\nabla_{\mathbf{u}}\phi_\lambda = 0$ by virtue of having solved Equation (5). We have

$$(6) \quad \overline{\phi}_\lambda(\mathbf{m}) = \phi_\lambda(\mathbf{m}, \overline{\mathbf{u}}(\mathbf{m})),$$

wherein $\overline{\mathbf{u}}$ is the field obtained in step (ii) and using the expression in Equation (7)

$$(7) \quad \nabla_{\mathbf{m}}\overline{\phi}_\lambda(\mathbf{m}) = \nabla_{\mathbf{m}}\phi_\lambda(\mathbf{m}, \overline{\mathbf{u}}) = \sum_{i=1}^{M} \lambda^2 G_i(\mathbf{m}, \overline{\mathbf{u}}_i)^*(A_i(\mathbf{m})\overline{\mathbf{u}}_i - \mathbf{q}_i)$$

and calculation of a sparse approximation of the Hessian (H) by ignoring the $\mathcal{O}(\lambda^4)$ terms in Equation (8)

$$(8) \quad \nabla^2\overline{\phi}_\lambda(\mathbf{m}) = \sum_{i=1}^{M} \lambda^2 G_i^* G_i - \lambda^4 G_i^* A_i(P_i^T P_i + \lambda^2 A_i^* A_i)^{-1} A_i^* G_i,$$

and by summing over all sources, and calculation of an update for the physical model parameters using the calculated gradient and the calculated inversion of the sparse approximation of the Hessian.

If the $\mathcal{O}(\lambda^4)$ terms are neglected, the Hessian

$$H = \sum_{i=1}^{M} \lambda^2 G_i^* G_i$$

becomes sparse and typically diagonal dominant. Given these expressions for the gradient and approximate Hessian, the physical parameter updates become

$$(9) \quad \delta\mathbf{m} = -H^{-1}\nabla_{\mathbf{m}}\overline{\phi}_\lambda(\mathbf{m}).$$

The gradient and Hessian can be formed without storing all the fields by assembling the terms in a running sum. Thus, the fields can be solved independently and in parallel while aggregating the results. Therefore the method is suitably performed wherein an update for the physical model parameters in step (iii) is calculated by solving the data-augmented PDEs of step (ii) in parallel and aggregating the gradient and Hessian of step (iii) across all sources. In such an approach equations (7) and (8) are solved in parallel.

The above basic iterative method minimizes the objective of equation (6) thereby avoiding to have to store all 2M fields and comprises of the following steps:

1. select an appropriate initial model $\mathbf{m}^0$ and trade-off parameter $\lambda$,

2. solve the data-augmented PDEs $\begin{pmatrix} \lambda A_i(\mathbf{m}^k) \\ P_i \end{pmatrix} \mathbf{u}_i = \begin{pmatrix} \lambda \mathbf{q}_i \\ \mathbf{d}_i \end{pmatrix}$ for all $i$,

3. compute the gradient $\mathbf{g} = \sum_{i=1}^{M} \lambda^2 G_i(\mathbf{m}^k, \mathbf{u}_i)^*(A_i(\mathbf{m}^k)\overline{\mathbf{u}}_i - \mathbf{q}_i)$ by aggregrating the results of step 2 over all $i$,

4. compute the (approximate) Hessian $H = \sum_{i=1}^{M} \lambda^2 G_i^* G_i$ by aggregrating the results of step 2 over all $i$,

5. compute the update $\delta\mathbf{m} = -H^{-1}\mathbf{g}$,

6. determine a steplength $\alpha$,

7. update $\mathbf{m}^{k+1} = \mathbf{m}^k + \alpha\delta\mathbf{m}$ and increase the trade-off parameter $\lambda$ and repeat steps 2-7 until a predetermined stopping criterion is met.

In the method according to the invention the steps (ii) and (iii) are repeated until a predetermined stopping criterion is met. Such a stopping criterion may be obtained, given initial estimates for the physical model parameters and the source function, via a local optimization method that utilizes the misfit value, gradient and Hessian as obtained in steps (ii) en (iii) in the context of a steepest-descent method, or, a Quasi/Gauss/full-Newton method, or a trust-region method or obtained via (bb) a global search method, that utilizes values of the modified objective of equation (6) in the context of a simplex-based method or a simulated-annealing-based method. In the above method the misfit value, sometimes referred to as the misfit function represents a single value or number which expresses the misfit which is minimized as a function of m and u.

Suitably the trade-off parameter $\lambda$ is increased at a predefined rate ensuring convergence of the algorithm to a solution of the PDE-constrained optimization problem according to equation (1)

$$(1) \quad min_{\mathbf{m},\mathbf{u}} \sum_{i=1}^{M} \frac{1}{2} \parallel P_i \mathbf{u}_i - \mathbf{d}_i \parallel_2^2 \quad \text{s.t.} \quad A_i(\mathbf{m})\mathbf{u}_i = \mathbf{q}_i, \quad i = 1 \cdots M$$

Thus the invention is also directed to a computer-implemented method for obtaining a physical model having physical model parameters wherein solutions to one or more partial-differential-equations (PDE's) are calculated, wherein the PDE's are constrained by observed data from a system whose response to a known source function is modeled by solutions of those PDEs for a given physical model using physical model parameters, and these solutions are subsequently used to update the physical model parameters, comprising the following steps:

(a) discretization of the PDE resulting in the system matrices $A_i(\mathbf{m})$ in Equation (4),

$$(4) \quad \phi_\lambda(\mathbf{m}, \mathbf{u}) = \sum_{i=1}^{M} \frac{1}{2} \parallel P_i \mathbf{u}_i - \mathbf{d}_i \parallel_2^2 + \frac{\lambda^2}{2} \parallel A_i(\mathbf{m})\mathbf{u}_i - \mathbf{q}_i \parallel_2^2$$

parameterized by the physical model parameters $\mathbf{m}$,

wherein $\mathbf{m} \in \mathbb{C}^N$ is a vector of length N with gridded medium parameters, $i = 1 \ldots M$ is the experiment index,

$\mathbf{d}_i \in \mathbb{C}^K$ are the observed data with $K$ the number of samples,

$A_i(\mathbf{m})$ is the system matrix,

$\mathbf{q}_i \in \mathbb{C}^N$ represent the discretized source vectors,

$\mathbf{u}_i \in \mathbb{C}^N$ are the corresponding discretized fields,

$P_i$ is the detection operator for the $i^{th}$ source experiment,

$\lambda$ is a trade-off parameter

(b) discretization of the source function resulting in the source vector $\mathbf{q}_i$ in Equation (4),

(c) implementation of a linear operator that models the physical properties of the receivers for each source experiment, resulting in $P_i$ in Equation (4),

(d) definition of the penalty objective function in Equation (4) consisting of a least-squares data-misfit term,

$\parallel P_i \mathbf{u}_i - \mathbf{d}_i \parallel_2^2$, and a $\lambda$-weighted PDE-residual term, $\parallel A_i(\mathbf{m})\mathbf{u}_i - \mathbf{q}_i \parallel_2^2$,

(e) minimization of Equation (4) with respect to the fields $\mathbf{u}_i$ by solving for each $i$ the data-augmented PDE as defined in Equation (5),

$$(5) \quad \begin{pmatrix} \lambda A_i(\mathbf{m}) \\ P_i \end{pmatrix} \mathbf{u}_i = \begin{pmatrix} \lambda \mathbf{q}_i \\ \mathbf{d}_i \end{pmatrix}$$

which consists of the system matrix for a given model for the physical parameters, scaled by the trade-off parameter $\lambda$, and the data-acquisition operator defined under step c, wherein the right-hand side of this augmented system consists of the source function defined under step b, scaled by the trade-off parameter, and the observed data organized in a vector,

(f) calculation of the gradient from the modified objective, defined in Equation (6),

$$(6) \quad \overline{\phi}_\lambda(\mathbf{m}) = \phi_\lambda(\mathbf{m}, \overline{\mathbf{u}}(\mathbf{m})),$$

using the expression in Equation (7)

$$(7) \quad \nabla_{\mathbf{m}}\overline{\phi}_\lambda(\mathbf{m}) = \nabla_{\mathbf{m}}\phi_\lambda(\mathbf{m}, \overline{\mathbf{u}}) = \sum_{i=1}^{M} \lambda^2 G_i(\mathbf{m}, \mathbf{u}_i)^* (A_i(\mathbf{m})\overline{\mathbf{u}}_i - \mathbf{q}_i).$$

that involves the summation over all sources of the adjoint of the Jacobian with respect to the physical medium properties of the field computed under step e and multiplied by the system matrix, applied to the PDE-residual term defined under step d,

(g) calculation of a sparse approximation of the Hessian by ignoring the $\mathcal{O}(\lambda^4)$ terms in Equation (8)

$$(8) \quad \nabla^2\overline{\phi}_\lambda(\mathbf{m}) = \sum_{i=1}^{M} \lambda^2 G_i^* G_i - \lambda^4 G_i^* A_i (P_i^T P_i + \lambda^2 A_i^* A_i)^{-1} A_i^* G_i,$$

and by summing over all sources, and

(h) calculation of an update for the physical model parameters using the gradient calculated under step f and the inversion of the approximate Hessian calculated under step g.

A comparison of the constrained, reduced and penalty formulations in terms of the computational complexity for FWI is given in the table below, wherein M represents the number of source experiments and N is the number of discretization points within each field.

| | PDE's | Storage | Gauss-Newton update |
|---|---|---|---|
| constrained | 0 | $M \times N$ | solve sparse symmetric, possibly indefinite system in $(M + 1) \times N_g$ unknowns |
| reduced | $2M$ | $2N$ | solve matrix-free linear system in $N$ unknowns, requiring $M$ PDE solves per mat-vec |
| penalty | $M$ | $N$ | solve sparse SPSD system in $N$ unknowns |

A key step in the penalty method is the solution of the augmented PDE (5). While one can make use of factorization techniques for small-scale applications to efficiently solve the data-augmented PDE for multiple right-hand-sides, industry-scale applications, such as large, sparse, mildly overdetermined systems, will typically require (preconditioned) iterative solution of such systems. Suitably the calculation of solutions of the data-augmented system defined in Equation (5) having multiple right-hand-sides is performed using solution techniques that exploit multiple right-hand-sides. Preferably the solution technique involves solving for the multiple right-hand-sides in parallel, by reusing the QR factors of the data-augmented PDE, or by using block-iterative Krylov methods. More preferably the data-augmented PDE, such as for example the data-augmented wave equation, is solved by direct solvers based on QR factorizations, or by iterative solvers based on (randomized) (block) Kaczmarz, or by iterative solvers based on the parallel row-projected block CARP-CG method.

Examples of suitable methods for the above is a generic accelerated row-projected method described by Björck, Å., and T. Elfving. 1979. "Accelerated projection methods for computing pseudoinverse solutions of systems of linear equations." BIT 19 (2) (jun): 145-163. doi:10.1007/BF01930845, and Gordon, Dan, and Rachel Gordon. 2013. "Robust and highly scalable parallel solution of the Helmholtz equation with large wave numbers." Journal of Computational and Applied Mathematics 237 (1) (jan): 182-196. doi:10.1016/j.cam.2012.07.024 which proved successful in seismic applications and can be easily extended to deal with overdetermined systems (Censor, Yair, Paul P. B. Eggermont, and Dan Gordon. 1983. "Strong underrelaxation in Kaczmarz's method for inconsistent systems" Numerische Mathematik 41 (1) (feb): 83-92. doi:10.1007/BF01396307) and multiple right-hand-sides by using block-Krylov methods.

Time-domain formulation: An application of the penalty method to static PDEs, in which case a complete field $\mathbf{u}_i$ for one source can be stored is straightforward. For a time-varying PDE, the PDE (after spatial discretization) can be written as $M(\mathbf{m})\mathbf{u}'(t) + S\mathbf{u}(t) = \mathbf{q}(t)$, and the system matrix $A(\mathbf{m})$ contains the matrices $M$ and $S$ as blocks. It is no longer feasible to store the fields for all time steps and the matrix is inverted some form of time-stepping. The data-augmented PDE involves an extra equation of the form $P\mathbf{u}(t) = \mathbf{d}(t)$. While one can in principle formulate a large overdetermined system for the wavefield at all timesteps, this is not feasible and a suitable time-stepping strategy will have to be developed to solve the augmented PDE without storing the fields for all time steps. One possible avenue is the use of (implicit) QR factorization to form a block lower triangular matrix that is conducive to solution via time-stepping. Another possibility is to form the Normal equations, leading to a banded system that can be solved efficiently by forward and backward time-stepping. Thus the calculation of solutions of the data-augmented system defined in Equation (5) based on a time-dependent PDE may be performed using a time-stepping algorithm.

The computational cost may be reduced by using recently proposed dimensionality reduction/random-trace-estimation techniques that essentially reduce the number of right-hand-sides of the PDE by random subselection or aggregation as described in WO2011160201, US20100018718 and in Avron, Haim, and Sivan Toledo. "Randomized algorithms for estimating the trace of an implicit symmetric positive semi-definite matrix." Journal of the ACM (JACM) 58.2 (2011): 8 and in Haber, Eldad, Matthias Chung, and Felix Herrmann. 2012. "An Effective Method for Parameter Estimation with PDE Constraints with Multiple Right-Hand Sides." SIAM Journal on Optimization 22 (3) (jul): 739-757, doi:10.1137/11081126X. Suitably the number of sources of the source field and/or receivers of the detection operator $P_i$ are reduced. Preferably the number of sources of the source field and/or receivers of the detection operator $P_i$ are reduced by a method comprising a source/receiver-subset selection procedure given by Equation (10)

$$(10) \quad \tilde{\mathbf{q}}_i = \sum_{j=1}^{M} w_{ij}\,\mathbf{q}_j, \quad \tilde{\mathbf{d}}_i = \sum_{j=1}^{M} w_{ij}\,\mathbf{d}_i,$$

where $i = [1,2, \ldots , M']$ (M' << M) and $w_{ij}$ are given by

1. $w_{ij} = \delta_{ij}$ for a randomly chosen $j \in [1, M]$, or by
2. random Gaussian weights, or by
3. Rademacher random variables $w_{ij} \in \{-1,1\}$, or by
4. random phases $w_{ij} = exp(\sqrt{-1}a_{ij})$, $a_{ij} \in [-\pi,\pi]$ or by other randomly drawn weights used in sketching techniques, and based on
   various types of randomized separable, or,
   nonseparable source/receiver encodings
   with random signs, Gaussian weights, random phase rotations, or random time shifts, followed by superposition, or various types of randomized separable, or,
   nonseparable selections of sources/receivers
   using uniform random sampling with or without replacement, jitter sampling with or without replacement, or importance sampling with and without replacement.

The subset selection may be controlled by either redrawing the subsets, and/or by increasing the cardinality of the subsets after each gradient calculation in step (iii) as described in Friedlander, Michael P., and Mark Schmidt. 2012. "Hybrid Deterministic-Stochastic Methods for Data Fitting." SIAM Journal on Scientific Computing 34 (3) (may): A1380-A1405. doi:10.1137/110830629.; T. van Leeuwen and Herrmann 2012).

The formulation in Equation (4) can if necessary be improved by replacing the Euclidian norms for the misfit functionals by misfit functionals that are robust with respect to outliers in the observed data or measure the misfit in (weighted) matrix norms, for example more general (weighted) two norms, or by robust (weighted) norms such as the one-norm, or by Schatten p matrix norms, such as the Nuclear norm. For matrix norms, the sums over the M individual source experiments in Equation (4) are replaced by matrix norms taken over wavefields organized as matrices. Wavefields for each time-harmonic experiment sharing the same receivers are organized as columns of these matrices.

The computational costs of these improvements may be reduced by using (weighted) random trace-norm estimation techniques for the two-norm, or by using recently proposed and above referred to sketching techniques, extending random-trace estimation to other than two norms as described by Clarkson, K. L., Drineas, P., Magdon-Ismail, M., Mahoney, M. W., Meng, X., & Woodruff, D. P. (2013, January), The Fast Cauchy Transform and Faster Robust Linear Regression, In SODA (pp. 466-477), or by sketching techniques for the estimation of matrix norms such as the Schatten norm as described by Yi Li, Hu L. Nguyen, and David P. Woodruff, "On Sketching Matrix Norms and the Top Singular Vector", 2014.

The error induced by the randomized subset selection may be controlled by either redrawing the subsets, and/or by increasing the cardinality of the subsets after each gradient calculation in step (iii).

In step (iii) the physical model parameters may be updated subject to prior constraint. This update is also referred to as regularization in the physical model parameters and can be used to add prior knowledge about the physical model parameters, such as for example minimum or maximum values. One way of achieving this is by adding a suitable regularization term R(m) to equation (4) resulting in equation (11).

$$(11)$$

$$min_{\mathbf{m},\mathbf{u}}\phi_\lambda(\mathbf{m},\mathbf{u}) = \sum_{i=1}^{M} \frac{1}{2} \| P_i \mathbf{u}_i - \mathbf{d}_i \|_2^2 + \frac{\lambda^2}{2} \| A_i(\mathbf{m})\mathbf{u}_i - \mathbf{q}_i \|_2^2 + R(\mathbf{m}).$$

Regularization by transform-domain sparsity promotion via (weighted) one-norm minimization may be included, or regularization by TV-norm minimization may be included or regularization by Sobolev-norm minimization may be included.

Also, regularization techniques on the (Gauss-Newton) subproblems can be included. This includes for example $\ell_1$ regularization as proposed by Li et al. (2012) and $\ell_2$ regularization as is used in trust-region methods. It is to be understood that these Euclidean $\ell_2$ norms can be replaced by other metrics depending on the function spaces to which $\mathbf{u}$ and $\mathbf{m}$ belong.

Penalties : Penalties other than the $\ell_2$ norm on either the data-misfit or the constraint can be included in the formulation (4). However, this will most likely prevent us from solving for the fields efficiently via a system of equations (5). Still, most alternative penalties may be approximated by a weighted $\ell_2$ norm, in which case a system like (5) *can* be formed as in (12):

$$(12) \quad \begin{pmatrix} \lambda W_1 A_i(\mathbf{m}) \\ W_2 P_i \end{pmatrix} \mathbf{u}_i = \begin{pmatrix} \lambda W_1 \mathbf{q}_i \\ W_2 \mathbf{d}_i \end{pmatrix},$$

possibly leading to an iteratively re-weighted least-squares approach.

The method according to the invention may also be used when some aspects of the experiment are not known but can be described by a set of parameters. Such parameters are sometimes referred to as nuisance parameters and they can be estimated in addition to the steps (ii) and (iii). Eexamples of nuisance parameters are the source-weights in seismic applications or the time-signature of the source function. Suitably the source weights are calculated, given the current physical model parameters, and the solution of the data-augmented PDE as defined in step (ii), by minimizing Equation (13) for each *i* with respect to the unknown source weight. The penalty objective, in this case becomes

$$(13) \quad \phi_\lambda(\mathbf{m},\mathbf{u},\theta) = \frac{1}{2}\sum_{i=1}^{M} \| \theta_i P_i \mathbf{u}_i - \mathbf{d}_i \|_2^2 + \lambda^2 \| \theta_i A_i(\mathbf{m})\mathbf{u}_i - \mathbf{q}_i \|_2^2,$$

wherein $\theta_i$ represents the source scaling nuisance parameter. The field may be solved first from (5) and subsequent minimization over $\theta$ for the given fields is trivial as a closed-form solution is available:

$$\theta_i = \frac{\mathbf{u}_i^*(P_i^* \mathbf{d}_i + \lambda^2 A_i^* \mathbf{q}_i)}{\| P_i \mathbf{u}_i \|_2^2 + \lambda^2 \| A_i \mathbf{u}_i \|_2^2}.$$

This approach can be generalized to more complicated situations in which a closed-form solution is not available as described by Aravkin, A. Y., and T. van Leeuwen. 2012. "Estimating nuisance parameters in inverse problems." Inverse Problems 28 (11): 115016.

Suitably the method makes use of so-called Uncertainty Quantification, which provides information on the uncertainties, via probability density functions or attributes thereof such as variances, for the physical model at each grid point. Uncertainty quantification is typically based on a Gaussian model for the probability-density function over the model-space given by

$$(14) \quad \pi(\mathbf{m}) \propto exp(-(\mathbf{m}-\mathbf{m}^*)H^{-1}(\mathbf{m}-\mathbf{m}^*)),$$

where $\mathbf{m}^*$ is a minimizer of the penalty objective and $H$ is the (Gauss-Newton) Hessian of the penalty objective function. In this case, the Hessian can be easily approximated by a sparse matrix (see Equation (8)) and it's inverse can be computed via factorization techniques. This allows for extraction of various statistics of $\pi(\mathbf{m})$ as well as generation of random models according to $\pi(\mathbf{m})$

The method may find suitable use in the field of PDE constrained optimization problems such as in process control, medical imaging, non-destructive testing, radar imaging, remote sensing, radiative transfer and design. More preferably the method is used in the field of travel-time tomography in geophysical prospecting, in the field of electromagnetic inversion in geophysical prospecting, in the field of inversion of gravity data in geophysical prospecting and in the field of wave-equation based inversion in geophysical prospecting and wherein the physical model is a model of a geological area. The model may be used by geologists, reservoir engineers or drilling engineers to help them understand the geological area and the relevant hydrocarbon reservoir.

In an even more preferred use the method is used in the field of wave-equation based inversion in geophysical prospecting and wherein the model of a geological area has poro/visco-elastic model parameters. Wave-equation based inversion methods include:

- Wave-equation based migration, which is the preferred method for imaging reflected waves. This can be achieved by applying steps (ii) and (iii) of the method according to the invention to suitably processed data and a suitable initial model of the visco/poro-elastic parameters.
- Linearized amplitude-versus-offset/angle/ray-parameter inversion, which is the preferred method for reservoir characterization. This can be achieved by applying steps (ii) according the invention and using the field obtained in step (ii) and the corresponding PDE-residual to form image gathers as a function of offset/angle/ray-parameter and fitting the amplitude behavior to linearized reflection coefficients.
- Wave-equation based migration velocity analysis, which is the preferred method for obtaining a smooth model of the visco/poro-elastic parameters for use as an initial model for FWI. This can be achieved by applying step (ii) according to the invention and a modification of step (iii) according to the invention in which the field obtained in step (ii) is correlated with the PDE-residual at non-zero lags/offsets to form image gathers. Having contracted these image gathers, an update of the visco/poro-elastic parameters can be extracted using techniques known to those trained in the art of velocity analysis.
- Full waveform inversion, which is the preferred method for obtained high-resolution models of the visco/poro-elastic parameters in geologically complex areas. This can be achieved by iteratively applying steps (ii) and (iii) according to the invention on suitably preprocsessed data and possibly including various manners of continuation in frequency/offset/depth.

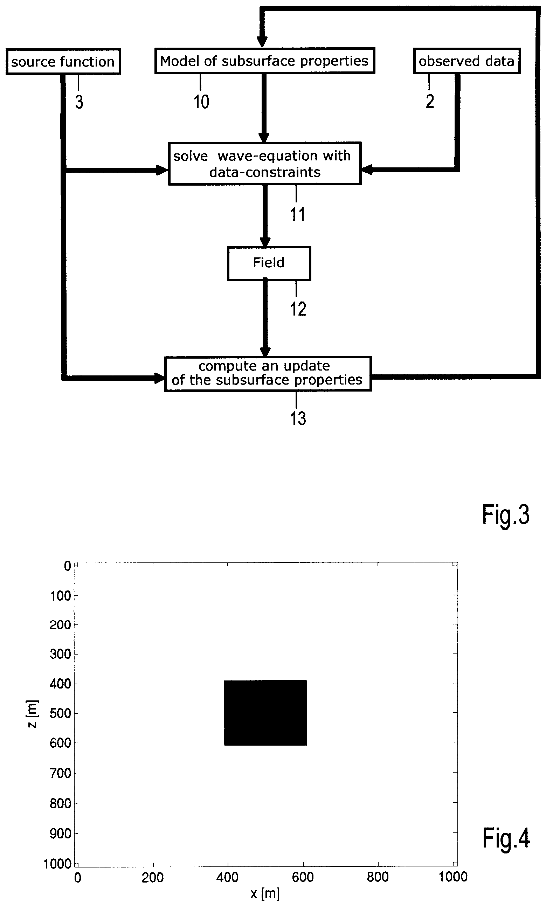

The differences between the current algorithms for full waveform inversion and the method according to the invention is illustrated in Figures 2 and 3. Figure 2 illustrates the known waveform inversion approach for a computer implemented method for geophysical prospecting. The methods is aimed at obtaining a physical model (1) having physical model parameters wherein solutions to one or more partial-differential-equations (PDE's) are calculated, wherein the PDE's are constrained by observed data (2) from a system whose response to a known source function (3) is modeled by solutions of those PDEs for a given physical model using physical model parameters. In this method one may start from an appropriate initial model (4). Subsequently the wave propagation is simulated (5) using the source function (3) and the model (1), for example by means of the finite differences methodology. Subsequently predicted data (6) may be calculated using the simulated wave-propagation of step (5). In step (7) the model (1) is updated using the difference between the observed data (2) and the predicted data (6). The steps of simulating the wave propagation and updating the model are repeated until a predetermined stopping criterion is met.

Figure 3 illustrates the method according to the present invention. As in Figure 1 it shows a computer-implemented method for obtaining a physical model (10) having physical model parameters wherein solutions to one or more partial-differential-equations (PDE's) are calculated, wherein the PDE's are constrained by observed data (2) from a system whose response to a known source function (3) is modeled by solutions of those PDEs for a given physical model using physical model parameters. In a step (i) an appropriate initial model (10) is selected. In a step (ii) data-augmented wave-equation (11) is formulated using the source function (3) and wherein the solution is constrained to fit the observed data (2) to obtain reconstructed wavefields, also referred to as field (12). In a step (iii) a wave-equation residual (13) is computed using the source function (3) and the field (12) and use the wave-equation residual (13) to update the physical model (10). Steps (ii)-(iii) are repeated until a predetermined stopping criterion is met.

Figure 3 shows an approach for full waveform inversion which includes the wave-equation as an additive regularization term. Applicants found that this regularization term controls the trade-off between data-fit and accuracy of the solution of the wave-equation. The resulting optimization problem can be solved efficiently with this approach. Furthermore this approach avoids having to solve an adjoint wave-equation and the approach avoids solving the wave-equation exactly and thus leads to a less non-linear problem.

In such a seismic application, given an initial model for the physical parameters, and an estimate for the source function, a basic implementation of the penalty method as described above for seismic applications may involve the following steps:

1. Solve the data-augmented wave equation (5) for all sources and compute the PDE residuals given by $(A_i(\mathbf{m})\overline{\mathbf{u}}_i - \mathbf{q}_i)$.

2. Correlate the wavefield $\overline{\mathbf{u}}_i$ with the PDE residual according to Equation (7), and apply the zero-time imaging condition by summing over the frequencies in the time-harmonic formulation, and aggregate over the sources to calculate the gradient.

3. Correlate the wavefield $\overline{\mathbf{u}}_i$ with itself according to Equation (8), and apply the zero-time imaging condition, and aggregate over the sources to calculate the (approximate) Hessian.

4. Apply a conditioning, for example scaling, smoothing or inverse Hessian, to the gradient to obtain the model update and update the model.

The above procedure is repeated for the updated model parameters until a predetermined stopping criterion is met, suitably wherein the data-misfit functional is decreased sufficiently or until the model updates become sufficiently small. The above formulation is conducive to be solved by commonly used optimization methods including gradient descent, nonlinear conjugate gradients, I-BFGS, and Gauss-Newton. The costs of these methods are proportional to the number of iterations times the number of source experiments, which determine the number of PDE solves. The above formulation is also conducive to dimensionality reduction techniques aimed at reducing the number of PDE solves.

As demonstrated in the examples below, the trade-off parameter $\lambda$ controls the width of the basin of attraction of the penalty objective function. By using a continuation method where the trade-off parameter is increased from a suitable starting value, the solution of the penalty method converges to the solution of the constrained method. For example, a suitable starting value for the trade-off parameter can be found by checking for cycle skips in the data residual.

The procedure described above can be used in conjunction with conventional FWI workflows, including:

1. multi-scale inversion, where the algorithm is applied to bandpass filtered data sweeping from low to high frequencies.

2. Laplace-domain damping, where the algorithm is applied to time-damped data, sweeping from small to larger time windows, and

3. offset-continuation, where the offset range of the data is gradually increased.

The above procedure is applicable to any discretization of a wave equation that models elastic waves in media that are viscous and may contain pores filled with a mixture of fluids and gases.

In view of the above the method when used in the field of wave-equation based inversion in geophysical prospecting may for example be performed as below. The method will use an initial estimate of the poro/visco-elastic model parameters. The method further comprises:

- (aaa) a procedure to determine a suitable value of the trade-off parameter $\lambda$ such that the initial estimate of the poro/visco-elastic model parameters is within the basin of attraction of the penalty objective function,
- (bbb) solution of the data-augmented wave equation (5) for all sources and computation of the PDE residuals as in step (ii) and part of step (iii) and wherein the remainder of step (iii) is performed in (ccc) and (ddd):
- (ccc) computation of the gradient by

  (c1) correlation of the wavefield obtained in (bbb) with the PDE residuals obtained in (bbb),
  (c2) application of the zero-time lag imaging condition,
  (c3) aggregation over the sources to calculate the gradient,

- (ddd) computation of an update of the poro/visco-elastic model parameters by

  (d1) the gradient of poro/visco-elastic model parameters, scaled by the steplength, or by,
  (d2) the gradient of poro/visco-elastic model parameters, scaled by the steplength and the inverse of the approximate aggregated Hessian, or by,
  (d3) using an I-BFGS approximation of the inverse of the Hessian.

- (eee) a continuation procedure to gradually increase the trade-off parameter $\lambda$.

Preferably the data-augmented wave equation in the above step (bbb) is solved by direct solvers based on QR factorizations, or by iterative solvers based on (randomized) (block) Kaczmarz, or by iterative solvers, for example based on the parallel row-projected block CARP-CG method.

Suitable a continuation method may be used to improve the convergence of the method according the invention. Suitable continuation methods are continuation methods are used that

- update the coarse scales of the poro/visco-elastic model parameters first by starting at the long wavelengths and using the updated coarse-scale poro/visco-elastic model parameters as warm starts to calculate updates of the poro/visco-elastic model parameters at the finer scales, and/or,
- update the shallow parts of the poro/visco-elastic model parameters first by starting with data from short time windows after the first arrival and using the updated shallow poro/visco-elastic model parameters as warm starts to calculate deeper updates of the poro/visco-elastic model parameters, and/or,
- update the acoustic model parameters first by starting with data from narrow offset windows and using the updated acoustic model parameters as warm starts to calculate updates of the elastic model parameters.

Suitably the poro/visco-elastic model parameter updates in step (iii) are conditioned by scaling to compensate for spherical spreading and other amplitude effects, and by linear (anisotropic) smoothing, or by nonlinear anisotropic smoothing by one-norm constraints on the transform domain (curvelet/wavelet) coefficients, or by nonlinear anistropic smoothing by total-variation norm constraints on the updates, or by nonlinear smoothing by anistropic-diffusion.

In one embodiment, the alternating penalty optimization method can suitably be used to conduct reverse-time migration based on the wave-equation and involves the computation of the following gradient:

$$\nabla_{\mathbf{m}} \phi_\lambda(\mathbf{m}_0, \mathbf{u}) = \sum_{i=1}^{M} G_i(\mathbf{m}, \mathbf{u}_i)^* (A_i(\mathbf{m}_0)\mathbf{u}_i - \mathbf{q}_i) = \sum_{i=1}^{M} J_i^* \, \delta\mathbf{u}_i,$$

which involves the action of the adjoint of the Jacobian

$$(15) \quad J_i(\mathbf{m}_0, \mathbf{u}_i) = G_i(\mathbf{m}, \mathbf{u}_i)$$

with $\mathbf{m}_0$ the simple background model, on the PDE residuals $\delta\mathbf{u}_i = (A_i(\mathbf{m})\mathbf{u}_i - \mathbf{q}_i)$, i = 1 ... M. As for the reduced formulation, migrated images are constructed by aggregating gradients over all M sources possibly in parallel. However, in the penalty formulation according to the present invention

- there is no need to solve the adjoint system, which effectively halves the memory imprint and required number of wave-equation solves.
- the Jacobian is a sparse matrix, which makes its evaluation computationally efficient compared to the Jacobian of the reduced formulation, which is a dense matrix whose application requires additional wave-equation solves.

In geologically complicated areas hampered by illumination problems, true-amplitude wave-equation least-squares migration is often the imaging method of choice. Least-squares migration involves the solution of the following optimization problem:

$$\min_{\delta\mathbf{m}} \sum_{i=1}^{M} \frac{1}{2} \| \mathbf{u}_i - J_i \delta\mathbf{m} \|_2^2,$$

which corresponds to solving the normal equations. Because the Jacobian is sparse, so is the Gauss-Newton Hessian, making it cheap to evaluate.

The method when used in the field of wave-equation based inversion in geophysical as described above may also be used by performing a linearized seismic inversion wherein step (ii) and (iii) of the method according to the invention may suitably be performed by

- a reverse-time migration by computing the gradient for a simple model of the poro/visco-elastic parameters, which is given by the action of the adjoint of the Jacobian, defined in Equation (15), on the PDE residual

$$\delta\mathbf{u}_i = (A_i(\mathbf{m})\mathbf{u}_i - \mathbf{q}_i), \, i = 1 \cdots M,$$

- a least-squares reverse-time migration by computing the least-squares pseudoinverse of the Jacobian defined in Equation (15) for a simple model of the poro/visco-elastic parameters and the PDE residual defined under a, or,

- a single iteration of the above described method according to the present invention.

Suitably wave-equation-based migration-velocity analysis is conducted and/or a linearized amplitude-versus-offset/angle/ray-parameter inversion is conducted. The method comprises formation of image-gathers from the wavefields that solve the data-augmented wave equation (field) and the PDE residuals that are minimized in order to find an update for the model parameters, used for

- quality control of the simple model of the elastic velocity parameters, or,
- compution of velocity parameter updates as part of a migration-velocity analysis procedure, or,
- amplitude-versus-offset/angle/ray-parameter attribute analysis, including two-term amplitude-versus-offset attributes.

**Examples**

The invention will be illustrated by the following non-limiting examples.

These examples are based on a simple 5-point discretization of the 2D Helmholtz operator for frequency $\omega_i$ and squared-slowness **m**

$$A_i(\mathbf{m}, \omega_i) := \omega_i^2 \text{diag}(\mathbf{m}) + L,$$

with L the discretized Laplacian. This simplifies the expression for the gradient (7) to

$$\nabla_{\mathbf{m}} \overline{\phi}_\lambda(\mathbf{m}, \mathbf{u}) = \lambda^2 \sum_{i=1}^{M} \omega_i^2 \, \text{diag}(\mathbf{u}_i)^* \delta \mathbf{u}_i$$

and the Hessian (8) can be approximated by

$$H = (\lambda^2) \sum_{i=1}^{M} \omega_i^4 \, \text{diag}(\mathbf{u}_i)^* \text{diag}(\mathbf{u}_i).$$

Because the Hessian is a diagonal matrix, Gaussian-Newton methods for FWI as well as least-squares migration can be implemented straightforwardly.

Example 1

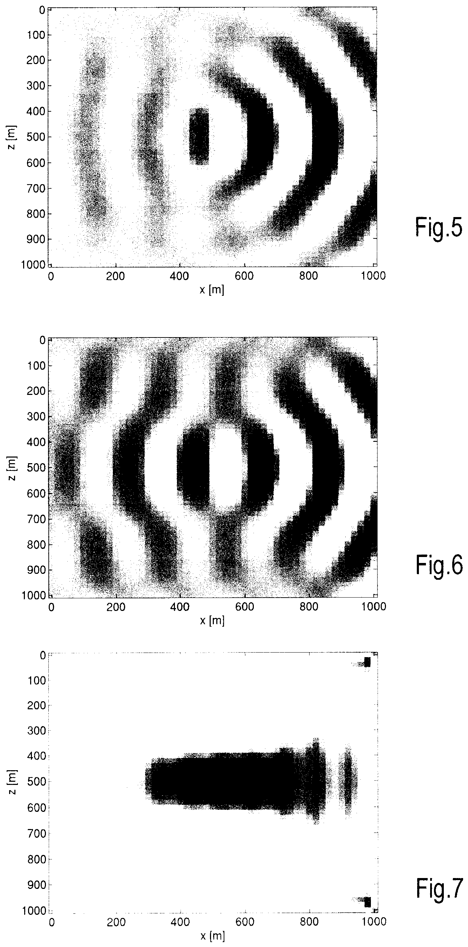

For the first example, a square perturbation embedded in constant velocity background is considered, see Figure 4. Sources and receivers are placed in a cross-well configuration. The corresponding scattered wavefield (i.e., the difference between the wavefield for the perturbed medium and the background medium) at 10 Hz for source at 10,500 is shown in figure 5.

The scattered wavefield is obtained by performing step (ii) of the method of the invention for a constant background and receivers along z = 10 is shown in figure 6. The corresponding estimate for **m** as obtained by performing step (iii) of the method according the invention is show in figure 7. Figure 7 shows an image of the estimated model parameters after one iteration, wherein the solution of the augmented wave equation contain "reflected/turned" wavefield components that are reminiscent of wavefield components arising from the solution of the adjoint wave equation.

By including the data-constraint in the PDE some of the structure of the original wavefield is retrieved. This information is subsequently used to derive a new estimate of the model.

Example 2

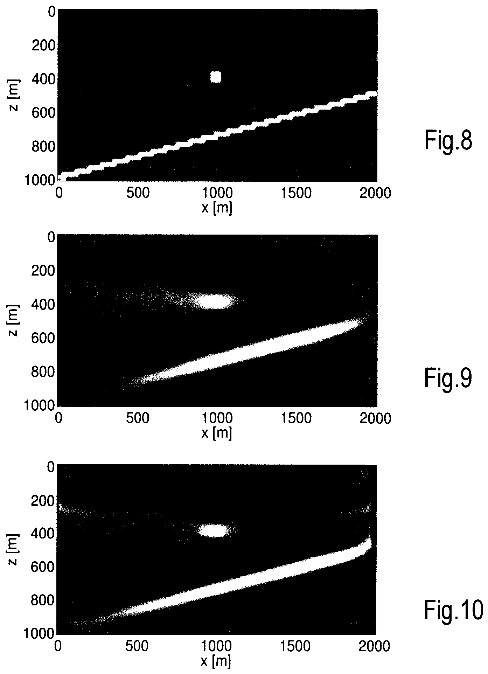

The penalty method can also be used for imaging purposes. Just as the gradient of the reduced objective yields an image, so does the gradient of the penalty objective. However, for the latter one does not need to solve for an adjoint wavefield. The velocity perturbation shown in figure 8 is considered and data are generated for 101 equispaced sources and receivers located at the top of the model and frequencies 1,2, ...,10Hz. The reverse-time migration according to the prior art method of Figure 2 is shown in figure 9. The image obtained by using the method according to the invention as illustrated in Figure 3 is shown in figure 10.

Example 3

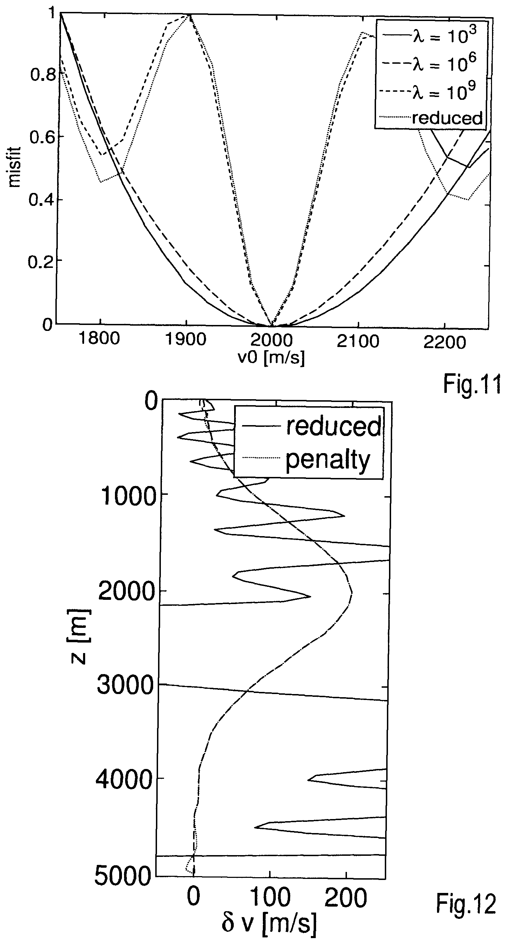

For the next example, a linearly increasing velocity $v_0 + \alpha z$ is considered and the objective functions corresponding to the equation (3) of the prior art and the penalty approaches according to equation (4) according to the present invention as a function of $v_0$ for various values of $\lambda$ is plotted in Figure 11.

Figure 11 shows that when the prior art method is used local minima appear in the objective function while when using the method according to the invention and when choosing a favorable $\lambda$ no local minima are present in the objective function. This shows that the method is less likely to stall.

Relaxing the PDE-constraint by using a small value of $\lambda$ does help alleviate some of the problems with local minima.

Example 4

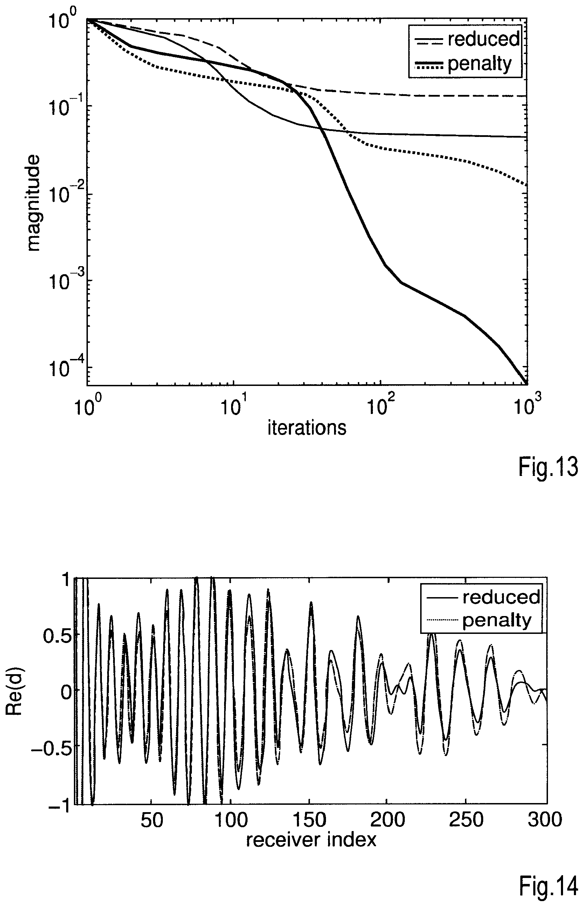

In this example, data for a single source and single frequency is inverted for a 1D velocity profile. The true velocity profile (dotted line in Figure 12) is given by $v(z) = v_0 + \alpha z + \delta v \exp(-\beta^2(z - z_0)^2)$ for values $v_0$ = 2000 m/s, $\alpha$ = 0.7 1/s, $\delta v$ = 200 m/s, $z_0$ = 2000 m and $\beta$ = 10$^{-3}$. A maximum offset of 3000 m and a frequency of 5 Hz are used. The initial model is a linear gradient with $v_0$ = 2000 m/s and $\alpha$ = 0.7 1/s. For the inversion a simple steepest-descent method with a fixed steplength is used. The result after 1000 iterations is shown in figures 12 and 13. The resulting data are shown in figure 14. Figure 14 shows that the observed data and the fitted data obtained by the method according to the invention overlay, while the data obtained by the reduced method deviate and show evidence of a cycle skip and near receiver index 200. The results indicate that the reduced approach according to the prior art is stuck in a local minimum whereas the penalty approach according to the method according to the invention gives a nice reconstruction. The above results for the method according to the invention may be further improved by using a more efficient optimization method as described above in this application to speed up the convergence.

**Claims**

1.   A computer-implemented method for obtaining a physical model having physical model parameters wherein solutions (field) to one or more partial-differential-equations (PDE's) are calculated, wherein the PDE's are constrained by observed data from a system whose response to a known source function and known sampling operator is modeled by solutions of those PDEs for a given physical model using physical model parameters, wherein (i) an appropriate initial model is selected, (ii) a system of equations for the field is set up, referred to as the data-augmented PDE for the field, comprising of the discretized PDE, the sampling operator, the source function and the observed data, and solve the data-augmented PDE in a suitable manner to obtain a field that both satisfies the PDE and fits the observed data to some degree, (iii) a system of equations is set up by using the PDE, the source function and the field obtained in step (ii) and solve this system of equations in a suitable manner to obtain an update of the physical model parameters and repeat steps (ii)-(iii) until a predetermined stopping criterion is met.

2.   A method according to claim 1, wherein step (ii) is performed by minimization of Equation (4) with respect to the fields $\mathbf{u}_i$ by solving for each $i$ the data-augmented PDE as defined in Equation (5),

$$(5) \quad \begin{pmatrix} \lambda A_i(\mathbf{m}) \\ P_i \end{pmatrix} \mathbf{u}_i = \begin{pmatrix} \lambda \mathbf{q}_i \\ \mathbf{d}_i \end{pmatrix}$$

and wherein equation (4) is:

$$(4) \quad \phi_\lambda(\mathbf{m}, \mathbf{u}) = \sum_{i=1}^{M} \frac{1}{2} \| P_i \mathbf{u}_i - \mathbf{d}_i \|_2^2 + \frac{\lambda^2}{2} \| A_i(\mathbf{m}) \mathbf{u}_i - \mathbf{q}_i \|_2^2$$

parameterized by the physical model parameters $\mathbf{m}$,

wherein $\mathbf{m} \in \mathbb{C}^N$ is a vector of length N with gridded medium parameters,
$i = 1... M$ is the experiment index with $M$ the number of experiments,

$\mathbf{d}_i \in \mathbb{C}^K$ are the observed data with K the number of samples,
$A_i(\mathbf{m})$ is the system matrix,

$\mathbf{q}_i \in \mathbb{C}^N$ represent the discretized source vectors obtained by discretization of the source function,

$\mathbf{u}_i \in \mathbb{C}^N$ are the corresponding discretized fields,
$P_i$ is the sampling operator for a $i^{th}$ source experiment,
$\lambda$ is a trade-off parameter

and wherein the least-squares data-misfit term, $\parallel P_i\mathbf{u}_i - \mathbf{d}_i \parallel_2^2$, and the $\lambda$-weighted PDE-residual term,

$\parallel A_i(\mathbf{m})\mathbf{u}_i - \mathbf{q}_i \parallel_2^2$, in equation (4) is a penalty objective function to obtain a field $\overline{\mathbf{u}} = [\overline{\mathbf{u}}_1; ... ; \overline{\mathbf{u}}_M]$.

3. A method according to claim 2, wherein step (iii) is performed by calculation of a gradient from a modified objective, defined in Equation (6),

$$(6) \qquad \overline{\phi}_\lambda(\mathbf{m}) = \phi_\lambda(\mathbf{m}, \overline{\mathbf{u}}(\mathbf{m})),$$

wherein $\overline{\mathbf{u}}$ is the field obtained in step (ii) and using the expression in Equation (7)

$$(7) \qquad \nabla_{\mathbf{m}}\overline{\phi}_\lambda(\mathbf{m}) = \nabla_{\mathbf{m}}\phi_\lambda(\mathbf{m}, \overline{\mathbf{u}}) = \sum_{i=1}^{M} \lambda^2 G_i(\mathbf{m}, \overline{\mathbf{u}}_i)^*(A_i(\mathbf{m})\overline{\mathbf{u}}_i - \mathbf{q}_i).$$

and calculation of a sparse approximation of the Hessian (H) by ignoring the $\mathcal{O}$ $(\lambda^4)$ terms in Equation (8)

$$(8) \quad \nabla^2\overline{\phi}_\lambda(\mathbf{m}) = \sum_{i=1}^{M} \lambda^2\, G_i^* G_i - \lambda^4 G_i^* A_i(P_i^T P_i + \lambda^2 A_i^* A_i)^{-1} A_i^* G_i,$$

and by summing over all sources, and
calculation of an update for the physical model parameters using the calculated gradient and the calculated inversion of the sparse approximation of the Hessian and wherein $G_i(\mathbf{m}, \mathbf{u}) = \dfrac{\partial A_i(\mathbf{m})\mathbf{u}_i}{\partial \mathbf{m}}$.

4. A method according to any one of claims 2-3, wherein the trade-off parameter $\lambda$ is increased at a predefined rate ensuring convergence of the algorithm to a solution of the PDE-constrained optimization problem according to equation (1):

$$min_{\mathbf{m},\mathbf{u}} \sum_{i=1}^{M} \frac{1}{2} \parallel P_i\mathbf{u}_i - \mathbf{d}_i \parallel_2^2 \quad \text{s.t.} \quad A_i(\mathbf{m})\mathbf{u}_i = \mathbf{q}_i, \quad i = 1 \cdots M.$$

5. A method according to claims 2-4, wherein calculation of solutions of the data-augmented system defined in Equation (5) based on a time-dependent PDE is performed using a time-stepping algorithm.

6. A method according to any one of claims 1-5, wherein the update for the physical model parameters in step (iii) is calculated by solving the data-augmented PDEs of step (ii) in parallel and aggregating the gradient and Hessian of step (iii) across all sources.

7. A method according to any one of claims 2-6, wherein the number of sources of the source field and/or receivers of the sampling operator $P_i$ are reduced.

8. A method according to claim 7, wherein the method of reducing the sources comprises a source/receiver-subset selection procedure given by Equation (10)

$$(10)....\tilde{\mathbf{q}}_i = \sum_{j=1}^{M} w_{ij}\,\mathbf{q}_j, \quad \tilde{\mathbf{d}}_i = \sum_{j=1}^{M} w_{ij}\,\mathbf{d}_i,$$

where $i = [1,2,..., M']$ $(M' << M)$ and $w_{ij}$ are given by

$w_{ij} = \delta_{ij}$ for a randomly chosen $j \in [1, M]$, or by
random Gaussian weights, or by
Rademacher random variables $wi_i \in \{-1,1\}$, or by

$$w_{ij} = exp(\sqrt{-1}a_{ij}),\, a_{ij} \in [-\pi, \pi]$$

random phases , or by other randomly drawn weights used in sketching techniques,

and based on

various types of randomized separable, or,
nonseparable source/receiver encodings
with random signs, Gaussian weights, random phase rotations, or random time shifts, followed by superposition, or
various types of randomized separable, or,
nonseparable selections of sources/receivers
using uniform random sampling with or without replacement, jitter sampling with or without replacement, or importance sampling with and without replacement.

9. A method according to 8, wherein the effects of the subset selection are controlled by either redrawing the subsets, and/or by increasing the cardinality of the subsets after each gradient calculation in step (iii).

10. A method according to any one of claims 2-9, wherein a suitable regularization term on the physical model parameters is included as in Equation (11):

$$(11)\ min_{\mathbf{m},\mathbf{u}}\phi_\lambda(\mathbf{m}, \mathbf{u}) = \sum_{i=1}^{M} \frac{1}{2}\parallel P_i\mathbf{u}_i - \mathbf{d}_i \parallel_2^2 + \frac{\lambda^2}{2}\parallel A_i(\mathbf{m})\mathbf{u}_i - \mathbf{q}_i \parallel_2^2 + R(\mathbf{m}),$$

wherein regularization by transform-domain sparsity promotion via (weighted) one-norm minimization is included, or wherein regularization by TV-norm minimization is included or wherein regularization by Sobolev-norm minimization is included and
wherein the weighted least-squares misfit terms in Equation (4) are replaced by misfit functionals that are robust with respect to outliers in the observed data or measure the misfit in weighted matrix norms.

11. A method according to any one of claims 1-10, wherein nuisance parameters required to compute updates of the physical model parameters are calculated while performing steps (ii) and (iii).

12. A method according to any one of claims 2-11, wherein the penalty formulation of Equation (4) is solved including uncertainty quantification, comprising generation of random realizations for the physical model parameters from a probability distribution function (14))

$$(14)\quad \pi(\mathbf{m}) \propto exp(-(\mathbf{m} - \mathbf{m}^*)H^{-1}(\mathbf{m} - \mathbf{m}^*)),$$

where $\mathbf{m}^*$ is a minimizer of the penalty objective and H is the Gauss-Newton Hessian of the penalty objective function.

13. A method according to any one of claims 1-12 for use in the field of PDE constrained optimization problems in process control, medical imaging, non-destructive testing, radar imaging, remote sensing, radiative transfer, and design.

14. A method according to any one of claims 1-13 for use in the field of travel-time tomography in geophysical prospecting, in the field of electromagnetic inversion in geophysical prospecting, in the field of inversion of gravity data in geophysical prospecting and in the field of wave-equation based inversion in geophysical prospecting and wherein the physical model is a model of a geological area, wherein the use is in the field of wave-equation based inversion in geophysical prospecting and wherein the model of a geological area has poro/visco-elastic model parameters, and wherein a wave-equation-based migration- is conducted or wherein a linearized amplitude-versus-offset/angle/ray-parameter inversion is conducted or wherein a wave-equation based migration velocity analysis is conducted or wherein a full-wave inversion is conducted.

**Patentansprüche**

1. Computerimplementiertes Verfahren zum Erhalten eines physikalischen Modells, das Parameter des physikalischen Modells aufweist, wobei Lösungen (Feld) für eine oder mehrere partielle Differentialgleichungen (partial-differential-equations - PDEs) berechnet werden, wobei die PDEs durch beobachtete Daten von einem System eingeschränkt werden, dessen Reaktion auf eine bekannte Quellfunktion und einen bekannten Stichprobenoperator durch Lösungen für diese PDEs für ein gegebenes physikalisches Modell unter Verwendung von Parametern des physikalischen Modells modelliert wird, wobei (i) ein geeignetes Anfangsmodell ausgewählt wird, (ii) ein Gleichungssystem für das Feld eingerichtet wird, bezeichnet als die datenaugmentierte PDE für das Feld, das aus der diskretisierten PDE, dem Stichprobenoperator, der Quellfunktion und den beobachteten Daten besteht, und das die datenaugmentierte PDE in einer geeigneten Weise löst, um ein Feld zu erhalten, das sowohl die PDE erfüllt als auch zu einem gewissen Grad zu den beobachteten Daten passt, (iii) ein Gleichungssystem durch Verwenden der PDE, der Quellfunktion und des in Schritt (ii) erhaltenen Feldes eingerichtet wird und dieses Gleichungssystem in einer geeigneten Weise löst, um eine Aktualisierung der Parameter des physikalischen Modells zu erhalten und die Schritte (ii)-(iii) zu wiederholen, bis ein zuvor bestimmtes Stoppkriterium befriedigt ist.

2. Verfahren nach Anspruch 1, wobei Schritt (ii) durch Minimierung von Gleichung (4) hinsichtlich der Felder $\bar{\mathbf{u}}_i$ durch Lösen für jedes $i$ der datenaugmentierten PDE durchgeführt wird, wie in Gleichung (5) definiert,

$$(5) \qquad \begin{pmatrix} \lambda A_i(\mathbf{m}) \\ P_i \end{pmatrix} \mathbf{u}_i = \begin{pmatrix} \lambda \mathbf{q}_i \\ \mathbf{d}_i \end{pmatrix}$$

und wobei Gleichung (4) Folgende ist:

$$(4) \qquad \phi_\lambda(\mathbf{m}, \mathbf{u}) = \sum_{i=1}^{M} \frac{1}{2} \|P_i \mathbf{u}_i - \mathbf{d}_i\|_2^2 + \frac{\lambda^2}{2} \|A_i(\mathbf{m})\mathbf{u}_i - \mathbf{q}_i\|_2^2$$

durch die Parameter des physikalischen Modells m parametrisiert,

wobei $\mathbf{m} \in \mathbb{C}^N$ ein Vektor der Länge $N$ mit Parametern eines gerasterten Mediums ist,
$i = 1 \dots M$ der Experimentindex ist, wobei $M$ die Anzahl von Experimenten ist,
$\mathbf{d}_i \in \mathbb{C}^K$ die beobachteten Daten sind, wobei K die Anzahl von Stichproben ist,
$A_i(\mathbf{m})$ die Systemmatrix ist,
$\mathbf{q}_i \in \mathbb{C}^N$ die diskretisierten Quellvektoren darstellt, die durch die Diskretisierung der Quellfunktion erhalten werden,
$\mathbf{u}_i \in \mathbb{C}^N$ die entsprechenden diskretisierten Felder sind,
$P_i$ der Stichprobenoperator für ein $i$-tes Quellexperiment ist,
$\lambda$ ein Trade-Off-Parameter ist

und wobei der Term der kleinsten Quadrate einer Datenfehlanpassung $\|P_i\mathbf{u}_i - \mathbf{d}_i\|_2^2$, und der $\lambda$-gewichtete PDE-Restterm $\|A_i(\mathbf{m})\mathbf{u}_i - \boldsymbol{q}_i\|_2^2$, in Gleichung (4) eine Strafzielfunktion ist, um ein Feld $\bar{\mathbf{u}} = [\bar{\mathbf{u}}_1; ...; \bar{\mathbf{u}}_M]$ zu erhalten.

3. Verfahren nach Anspruch 2, wobei Schritt (iii) durch Berechnung eines Gradienten aus einem modifizierten Ziel durchgeführt wird, die in Gleichung (6) definiert ist,

$$(6) \qquad \bar{\phi}_\lambda(\mathbf{m}) = \phi_\lambda\big(\mathbf{m}, \bar{\mathbf{u}}(\mathbf{m})\big),$$

wobei $\bar{\mathbf{u}}$ das in Schritt (ii) erhaltene Feld ist und den Ausdruck in Gleichung (7) verwendet

$$(7) \qquad \nabla_{\mathbf{m}}\bar{\phi}_\lambda(\mathbf{m}) = \nabla_{\mathbf{m}}\phi_\lambda(\mathbf{m}, \bar{\mathbf{u}}) = \sum_{i=1}^{M} \lambda^2 G_i(\mathbf{m}, \bar{\mathbf{u}}_i)^*(A_i(\mathbf{m})\bar{\mathbf{u}}_i - \boldsymbol{q}_i)$$

und Berechnung einer spärlichen Approximation der Hesse-Matrix (H) durch Ignorieren der $\mathcal{O}(\lambda^4)$ Terme in Gleichung (8)

$$(8) \qquad \nabla^2\bar{\phi}_\lambda(\mathbf{m}) = \sum_{i=1}^{M} \lambda^2 \, G_i^* G_i - \lambda^4 G_i^* A_i (P_i^T P_i + \lambda^2 A_i^* A_i)^{-1} A_i^* G_i,$$

und durch Summieren über alle Quellen, und
Berechnung einer Aktualisierung für die Parameter des physikalischen Modells unter Verwendung des berechneten Gradienten und der berechneten Inversion der spärlichen Approximation der Hesse-Matrix und wobei

$$G_i(\mathbf{m}, \mathbf{u}) = \frac{\partial A_i(\mathbf{m})\mathbf{u}_i}{\partial \mathbf{m}}.$$

4. Verfahren nach einem der Ansprüche 2-3, wobei der Trade-Off-Parameter $\lambda$ mit einer vordefinierten Rate gesteigert wird, wobei die Konvergenz des Algorithmus zu einer Lösung des PDE-eingeschränkten Optimierungsproblems gemäß Gleichung (1) sichergestellt wird:

$$min_{\mathbf{m}, \mathbf{u}} \sum_{i=1}^{M} \frac{1}{2} \|P_i\mathbf{u}_i - \mathbf{d}_i\|_2^2 \text{ s.t } A_i(\mathbf{m})\mathbf{u}_i = \boldsymbol{q}_i, \ i = 1 \cdots M.$$

5. Verfahren nach den Ansprüchen 2-4, wobei die Berechnung von Lösungen des in Gleichung (5) definierten datenaugmentierten Systems basierend auf einer zeitabhängigen PDE unter Verwendung eines Zeitschrittalgorithmus durchgeführt wird.

6. Verfahren nach einem der Ansprüche 1-5, wobei die Aktualisierung für die Parameter des physikalischen Modells in Schritt (iii) durch paralleles Lösen der datenaugmentierten PDEs von Schritt (ii) Aggregieren des Gradienten und der Hesse-Matrix von Schritt (iii) über alle Quellen hinweg berechnet wird.

7. Verfahren nach einem der Ansprüche 2-6, wobei die Anzahl von Quellen des Quellfeldes und/oder Empfängern des Stichprobenoperators $P_i$ reduziert wird.

8. Verfahren nach Anspruch 7, wobei das Verfahren zum Reduzieren der Quellen eine durch Gleichung (10) gegebene Auswahlvorgehensweise einer Quelle/Empfänger-Teilmenge umfasst.

$$(10) \dots \tilde{\boldsymbol{q}}_i = \sum_{j=1}^{M} w_{ij}\boldsymbol{q}_j, \quad \tilde{\boldsymbol{d}}_i = \sum_{j=1}^{M} w_{ij}\boldsymbol{d}_i,$$

wobei i = [1,2,..., *M'] [M'<< M)* und $w_{ij}$ durch Folgendes gegeben sind

$w_{ij} = \delta_{ij}$ für ein zufällig ausgewähltes $j \in [1, M]$ oder durch zufällige Gaußsche Gewichte oder durch Rademacher-Zufallsvariablen $w_{ii} \in \{-1,1\}$, oder durch

zufällige Phasen $w_{ij} = exp\left(\sqrt{-1}\,a_{ij}\right)$ , $a_{ij} \in [-\pi,\pi]$, oder durch andere zufällig gezogene Gewichte, die in Skizziertechniken verwendet werden,

und basierend auf

verschiedenen Arten von zufälligen trennbaren oder
nicht trennbaren Quelle-/Empfängercodierungen
mit zufälligen Zeichen, Gaußschen Gewichten, zufälligen Phasenrotationen oder zufälligen Zeitverschiebungen, gefolgt durch eine Superposition, oder
verschiedenen Arten von zufälligen trennbaren oder
nicht trennbaren Auswahlen von Quellen/Empfängern
unter Verwendung einer einheitlichen Zufallsstichprobenziehung mit oder ohne Zurücklegen, einer Jitter-Stichprobenziehung mit oder ohne Zurücklegen oder einer Wichtigkeitsstichprobenziehung mit und ohne Zurücklegen.

9. Verfahren nach Anspruch 8, wobei die Effekte der Teilmengenauswahl entweder durch Neuziehen der Teilmengen und/oder durch Steigern der Mächtigkeit der Teilmengen nach jeder Gradientenberechnung in Schritt (iii) gesteuert werden.

10. Verfahren nach einem der Ansprüche 2-9, wobei ein geeigneter Regularisierungsterm auf den Parametern des physikalischen Modells wie in Gleichung (11) beinhaltet ist:

$$(11)\, min_{\mathbf{mu}}\,\phi_\lambda(\mathbf{m}, \mathbf{u}) = \sum_{i=1}^{M} \frac{1}{2} \|P_i\mathbf{u}_i - \mathbf{d}_i\|_2^2 + \frac{\lambda^2}{2} \|A_i(\mathbf{m})\mathbf{u}_i - \boldsymbol{q}_i\|_2^2 + R(\mathbf{m}),$$

wobei eine Regularisierung durch Transform-Domain-Sparsity-Promotion über (gewichtete) One-Norm-Minimierung beinhaltet ist oder wobei eine Regularisierung durch eine TV-Norm-Minimierung beinhaltet ist oder wobei eine Regularisierung durch eine Sobolev-Norm-Minimierung beinhaltet ist und
wobei die Terme der kleinsten Quadrate der Fehlanpassung in Gleichung (4) durch Fehlfunktionen ersetzt werden, die hinsichtlich Ausreißern in den beobachteten Daten robust sind oder die Fehlanpassung in gewichteten Matrixnormen messen.

11. Verfahren nach einem der Ansprüche 1-10, wobei störende Parameter, die erforderlich sind, um Aktualisierungen der Parameter des physikalischen Modells zu kalkulieren, während des Durchführens der Schritte (ii) und (iii) berechnet werden.

12. Verfahren nach einem der Ansprüche 2-11, wobei die Strafformulierung von Gleichung (4) einschließlich einer Unsicherheitsquantifizierung gelöst wird, die eine Erzeugung von zufälligen Realisierungen für die Parameter des physikalischen Modells aus einer Wahrscheinlichkeitsverteilungsfunktion (14) umfasst.

$$(14)\; \pi(\mathbf{m}) \propto exp\left(-(\mathbf{m} - \mathbf{m}^*)H^{-1}(\mathbf{m} - \mathbf{m}^*)\right),$$

wobei **m**\* ein Minimierer des Strafziels ist und $H$ die Gauß-Newton-Hesse-Matrix der Strafzielfunktion ist.

13. Verfahren nach einem der Ansprüche 1-12 zur Verwendung in dem Gebiet von PDE-eingeschränkten Optimierungsproblemen bei Prozesssteuerung, medizinischer Bildgebung, zerstörungsfreier Prüfung, Radarbildgebung, Fernerkundung, Strahlungsübertragung und Design.

14. Verfahren nach einem der Ansprüche 1-13 zur Verwendung in dem Gebiet von Lauzeittomographie bei geophysikalischer Prospektion, in dem Gebiet von elektromagnetischer Inversion bei geophysikalischer Prospektion, in dem Gebiet von Inversion von Schwerkraftdaten bei geophysikalischer Prospektion und in dem Gebiet von Inversion auf Basis von Wellengleichung bei geophysikalischer Prospektion und wobei das physikalische Modell ein Modell eines geologischen Gebiets ist, wobei die Verwendung in dem Gebiet der Inversion auf Basis von Wellengleichung bei geophysikalischer Prospektion erfolgt und wobei das Modell eines geologischen Gebiets poro-/viskoelastische Modellparameter aufweist, und

wobei eine Migration auf Basis von Wellengleichung ausgeführt wird oder wobei eine linearisierte Amplitude-versus-Offset/Winkel/Strahlparameter-Inversion ausgeführt wird oder wobei eine Migrationsgeschwindigkeitsanalyse auf Basis von Wellengleichung ausgeführt wird oder wobei eine Vollwelleninversion ausgeführt wird.

**Revendications**

1. Procédé mis en œuvre par ordinateur pour obtenir un modèle physique ayant des paramètres de modèle physique dans lequel les solutions (champs) pour une ou plusieurs équations aux dérivées partielles (EDP) sont calculées, dans lequel les EDP sont contraintes par des données observées d'un système dont la réponse à une fonction source connue et à un opérateur d'échantillonnage connu est modélisée par des solutions de ces EDP pour un modèle physique donné à l'aide de paramètres de modèle physique, dans lequel (i) un modèle initial approprié est sélectionné, (ii) un système d'équations pour le champ établi, appelé EDP augmentée en donnée pour le champ, comprenant l'EDP discrétisée, l'opérateur d'échantillonnage, la fonction source et les données observées, et la résolution de l'EDP augmentée en données de manière appropriée pour obtenir un champ qui satisfait à la fois l'EDP et s'adapte aux données observées dans une certaine mesure, (iii) un système d'équations est mis en place à l'aide de l'EDP, la fonction source et le champ obtenu à l'étape (ii) et la résolution de ce système d'équations de manière appropriée pour obtenir une mise à jour des paramètres de modèle physique et répéter les étapes (ii) à (iii) jusqu'à ce qu'un critère d'arrêt prédéfini soit satisfait.

2. Procédé selon la revendication 1, dans lequel l'étape (ii) est effectuée par minimisation de l'équation (4) par rapport aux champs $\mathbf{u}_i$ en résolvant pour chaque $i$ l'EDP augmentée en données telle que définie dans l'équation (5),

$$(5) \qquad \begin{pmatrix} \lambda A_i(\mathbf{m}) \\ P_i \end{pmatrix} \mathbf{u}_i = \begin{pmatrix} \lambda \mathbf{q}_i \\ \mathbf{d}_i \end{pmatrix}$$

et dans lequel l'équation (4) est :

$$(4) \qquad \phi_\lambda(\mathbf{m}, \mathbf{u}) = \sum_{i=1}^{M} \frac{1}{2} \|P_i \mathbf{u}_i - \mathbf{d}_i\|_2^2 + \frac{\lambda^2}{2} \|A_i(\mathbf{m})\mathbf{u}_i - \mathbf{q}_i\|_2^2$$

paramétrée par les paramètres de modèle physique m,

dans laquelle $\mathbf{m} \in \mathbb{C}^N$ est un vecteur de longueur $N$ avec des paramètres de support en grille,
$i = 1 \dots M$ est l'indice d'expérience avec $M$ le nombre d'expériences,
$\mathbf{d}_i \in \mathbb{C}^K$ sont les données observées avec $K$ le nombre d'échantillons,
$A_i(\mathbf{m})$ est la matrice de système,
$\mathbf{q}_i \in \mathbb{C}^N$ représente les vecteurs source discrétisés obtenus par discrétisation de la fonction source,
$\mathbf{u}_i \in \mathbb{C}^N$ sont les champs discrétisés correspondants,
$P_i$ est l'opérateur d'échantillonnage pour une $i^{ème}$ expérience source,
$\lambda$ est un paramètre de compromis

et dans lequel le terme de non-ajustement de données par moindres carrés, $\|P_i \mathbf{u}_i - \mathbf{d}_i\|_2^2$ , et le terme de résiduel d'EDP pondéré $\lambda$, $\|A_i(\mathbf{m})\mathbf{u}_i - \mathbf{q}_i\|_2^2$ , dans l'équation (4) est une fonction objectif de pénalité pour obtenir un champ $\bar{\mathbf{u}} = [\bar{\mathbf{u}}_1; \dots; \bar{\mathbf{u}}_M]$.

3. Procédé selon la revendication 2, dans lequel l'étape (iii) est effectuée par calcul d'un gradient à partir d'un objectif modifié, défini dans l'équation (6),

$$(6) \qquad \bar{\phi}_\lambda(\mathbf{m}) = \phi_\lambda\big(\mathbf{m}, \bar{\mathbf{u}}(\mathbf{m})\big),$$

dans laquelle $\bar{\mathbf{u}}$ est le champ obtenu à l'étape (ii) et à l'aide de l'expression dans l'équation (7)

$$(7) \qquad \nabla_m \bar{\phi}_\lambda(\mathbf{m}) = \nabla_m \phi_\lambda(\mathbf{m}, \bar{\mathbf{u}}) = \sum_{i=1}^M \lambda^2 G_i(\mathbf{m}, \bar{\mathbf{u}}_i)^* (A_i(\mathbf{m})\bar{\mathbf{u}}_i - \boldsymbol{q}_i)$$

et calcul d'une approximation éparse de la hessienne (H) en ignorant les termes $\mathcal{O}(\lambda^4)$ de l'équation (8)

$$(8) \qquad \nabla^2 \bar{\phi}_\lambda(\mathbf{m}) = \sum_{i=1}^M \lambda^2\, G_i^* G_i - \lambda^4 G_i^* A_i (P_i^T P_i + \lambda^2 A_i^* A_i)^{-1} A_i^* G_i,$$

et en additionnant toutes les sources, et
calcul d'une mise à jour pour les paramètres de modèle physique à l'aide du gradient calculé et de l'inversion calculée de l'approximation éparse de la hessienne et dans lequel $G_i(\mathbf{m}, \mathbf{u}) = \frac{\partial A_i(\mathbf{m})\mathbf{u}_i}{\partial \mathbf{m}}$ .

4. Procédé selon l'une quelconque des revendications 2 à 3, dans lequel le paramètre de compromis $\lambda$ est augmenté à un taux prédéfini garantissant la convergence de l'algorithme vers une solution du problème d'optimisation de l'EDP contrainte selon l'équation (1) :

$$min_{\mathbf{m},\mathbf{u}} \sum_{i=1}^M \frac{1}{2} \|P_i \mathbf{u}_i - \mathbf{d}_i\|_2^2 \; \text{s.t}\, A_i(\mathbf{m})\mathbf{u}_i = \boldsymbol{q}_i, \; i = 1 \cdots M.$$

5. Procédé selon les revendications 2 à 4, dans lequel le calcul de solutions du système à données augmentées défini dans l'équation (5) sur la base d'une EDP dépendant du temps est effectué à l'aide d'un algorithme de schéma d'établissement d'un pas de temps.

6. Procédé selon l'une quelconque des revendications 1 à 5, dans lequel la mise à jour pour les paramètres de modèle physique à l'étape (iii) est calculée en résolvant les EDP augmentées en données de l'étape (ii) en parallèle et en agrégeant le gradient et le hessien de l'étape (iii) dans toutes les sources.

7. Procédé selon l'une quelconque des revendications 2 à 6, dans lequel le nombre de sources du champ source et/ou de récepteurs de l'opérateur d'échantillonnage $P_i$ sont réduits.

8. Procédé selon la revendication 7, dans lequel le procédé de réduction des sources comprend une procédure de sélection de source/sous-ensemble de récepteur donnée par l'équation (10)

$$(10) \, .... \, \tilde{\boldsymbol{q}}_i = \sum_{j=1}^M w_{ij} \boldsymbol{q}_j, \;\; \tilde{\boldsymbol{d}}_i = \sum_{j=1}^M w_{ij} \boldsymbol{d}_i,$$

dans laquelle $i = [1,2, ..., M']$ [$M' << M$) et $w_{ij}$ sont données par

$w_{ij} = \delta_{ij}$ pour un $j \in [1, M]$ choisi au hasard, ou par
des poids gaussiens aléatoires, ou par

des variables aléatoires de Rademacher $w_{ij} \in \{-1,1\}$, ou par des phases aléatoires $w_{ij} = exp\big(\sqrt{-1} a_{ij}\big)$ ,
$a_{ij} \in [-\pi, \pi]$, ou par d'autres poids choisis au hasard utilisés dans les techniques d'esquisse,

et basé sur

différents types de séparables aléatoires, ou,
de codages source/récepteur non séparables
avec des signes aléatoires, des poids gaussiens, des rotations de phase aléatoires ou des décalages temporels aléatoires, suivis d'une superposition, ou
différents types de séparables aléatoires, ou,
des sélections de sources/récepteurs non séparables
à l'aide d'un échantillonnage aléatoire uniforme avec ou sans remplacement, un échantillonnage de gigue avec ou sans remplacement ou un échantillonnage par importance avec et sans remplacement.

9. Procédé selon la revendication 8, dans lequel les effets de la sélection de sous-ensemble sont commandés soit en redessinant les sous-ensembles, et/ou en augmentant la cardinalité des sous-ensembles après chaque calcul de gradient à l'étape (iii).

10. Procédé selon l'une quelconque des revendications 2 à 9, dans lequel un terme de régularisation approprié sur les paramètres de modèle physique est inclus comme dans l'équation (11) :

$$(11)\, min_{\mathbf{mu}}\phi_\lambda(\mathbf{m}, \mathbf{u}) = \sum_{i=1}^{M} \frac{1}{2} \|P_i\mathbf{u}_i - \mathbf{d}_i\|_2^2 + \frac{\lambda^2}{2} \|A_i(\mathbf{m})\mathbf{u}_i - q_i\|_2^2 + R(\mathbf{m}),$$

la régularisation par la promotion de la dispersion du domaine de transformation par l'intermédiaire de minimisation (pondérée) d'une norme étant incluse, ou la régularisation par minimisation de la norme TV étant incluse ou la régularisation par minimisation de la norme Sobolev étant incluse et
les termes de non-ajustement par moindres carrés pondérés dans l'équation (4) étant remplacés par des fonctionnelles non ajustées qui sont robustes par rapport aux valeurs aberrantes dans les données observées ou mesurent le non-ajustement dans les normes de matrice pondérées.

11. Procédé selon l'une quelconque des revendications 1 à 10, dans lequel les paramètres de nuisance nécessaires pour calculer les mises à jour des paramètres de modèle physique sont calculés tout en effectuant les étapes (ii) et (iii).

12. Procédé selon l'une quelconque des revendications 2 à 11, dans lequel la formulation de pénalité de l'équation (4) est résolue y compris la quantification d'incertitude, comprenant la génération de réalisations aléatoires pour les paramètres de modèle physique à partir d'une fonction de distribution de probabilité (14))

$$(14)\, \pi(\mathbf{m}) \propto exp\big(-(\mathbf{m} - \mathbf{m}^*)H^{-1}(\mathbf{m} - \mathbf{m}^*)\big),$$

dans laquelle $\mathbf{m}^*$ est un minimiseur de l'objectif de pénalité et $H$ est le hessien de Gauss-Newton de la fonction objectif de pénalité.

13. Procédé selon l'une quelconque des revendications 1 à 12, destiné à être utilisé dans le domaine des problèmes d'optimisation de l'EDP contrainte dans la commande de processus, l'imagerie médicale, les tests non destructifs, l'imagerie radar, la détection à distance, le transfert radiatif et la conception.

14. Procédé selon l'une quelconque des revendications 1 à 13, destiné à être utilisé dans le domaine de la tomographie du temps de propagation en prospection géophysique, dans le domaine de l'inversion électromagnétique en prospection géophysique, dans le domaine de l'inversion de données de gravité en prospection géophysique et dans le domaine de l'inversion basée sur l'équation d'ondes en prospection géophysique et le modèle physique étant un modèle d'une zone géologique, l'utilisation étant dans le domaine de l'inversion basée sur l'équation d'ondes en prospection géophysique et le modèle d'une zone géologique ayant des paramètres de modèle poro/visco-élastique, et
une migration basée sur une équation d'ondes étant exécutée ou une inversion linéarisée de l'amplitude par rapport au paramètre de décalage/angle/rayon étant exécutée ou une analyse de vitesse de migration basée sur une équation d'ondes étant exécutée ou une inversion d'onde complète étant exécutée.

Step (ii)  Step (iii)

Fig.1

Fig.2

Fig.3

Fig.4

Fig.5

Fig.6

Fig.7

Fig.8

Fig.9

Fig.10

Fig.11

Fig.12

Fig.13

Fig.14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61815533
- WO 2011160201 A

- US 20100018718 A


### Non-patent literature cited in the description

- **HABER ; ELDAD ; URI M. ASCHER ; DOUG OLDENBURG.** On optimization techniques for solving nonlinear inverse problems. *Inverse Problems,* October 2000, vol. 16 (5), 1263-1280
- **TARANTOLA, A. ; A. VALETTE.** Generalized nonlinear inverse problems solved using the least squares criterion. *Reviews of Geophysics and Space Physics,* 1982, vol. 20 (2), 129-232
- **PLESSIX, R.-E.** A review of the adjoint-state method for computing the gradient of a functional with geophysical applications. *Geophysical Journal International,* 2006, vol. 167 (2), 495-503
- **RICHTER, R. G.** Numerical Identification of a Spatially Varying Diffusion Coefficient. *Mathematics of Computation,* 1981, vol. 36 (154), 375-386
- **WEGLEIN, ARTHUR B. ; FERNANDA V. ARAÚJO ; PAULO M. CARVALHO ; ROBERT H. STOLT ; KENNETH H. MATSON ; RICHARD T. COATES ; DENNIS CORRIGAN ; DOUGLAS J. FOSTER ; SIMON A. SHAW ; HAIYAN ZHANG.** Inverse scattering series and seismic exploration. *Inverse Problems,* December 2003, vol. 19 (6), R27-R83
- **VAN DEN BERG, P. M. ; R. E. KLEINMAN.** A contrast source inversion method. *Inverse Problems,* 1997, vol. 13 (6), 1620-1706
- **PLESSIX, R.-E. ; W. A. MULDER.** Frequency-domain finite-difference amplitude-preserving migration. *Geophysical Journal International,* 2004, vol. 157, 975-987
- **TARANTOLA, ALBERT.** *Inverse problem theory and methods for model parameter estimation,* 2005
- **GASSAN S ABDOULAEV et al.** Optical tomography as a PDE-constrained optimization problem. *Inverse Problems,* October 2005, vol. 21 (5), ISSN 0266-5611, 1507-1530
- **HABER, ELDAD ; MATTHIAS CHUNG ; FELIX HERRMANN.** An Effective Method for Parameter Estimation with PDE Constraints with Multiple Right-Hand Sides. *SIAM Journal on Optimization,* July 2012, vol. 22 (3), 739-757

- **ARAVKIN, ALEKSANDR ; MICHAEL P. FRIEDLANDER ; FELIX J. HERRMANN ; TRISTAN LEEUWEN.** Robust inversion, dimensionality reduction, and randomized sampling. *Mathematical Programming,* June 2012, vol. 134 (1), 101-125
- **LI, X. ; A. Y. ARAVKIN ; T. VAN LEEUWEN ; F. J. HERRMANN.** Fast randomized full-waveform inversion with compressive sensing. *Geophysics,* 2012, vol. 77 (3), A13
- **BUNKS, CAREY.** Multiscale seismic waveform inversion. *Geophysics,* September 1995, vol. 60 (5), 1457
- **PRATT, G. R. ; CHANGSOO SHIN ; G. J. HICKS.** Gauss-Newton and full Newton methods in frequency-space seismic waveform inversion. *Geophysical Journal International,* May 1998, vol. 133 (2), 341-362
- **BROSSIER, ROMAIN ; STEPHANE OPERTO ; JEAN VIRIEUX.** Seismic imaging of complex onshore structures by 2D elastic frequency-domain full-waveform inversion. *GEOPHYSICS,* November 2009, vol. 74 (6), WCC105-WCC118
- **HABER, E. ; U. M. ASCHER.** Preconditioned all-at-once methods for large, sparse parameter estimation problems. *Inverse Problems,* December 2001, vol. 17 (6), 1847-1864
- Computational Methods for Large Distributed Parameter Estimation Problems in 3D. **ASCHER, URI M. ; ELDAD HABER.** Modeling, Simulation and Optimization of Complex Processes. Springer, 2005, 15-36
- **EPANOMERITAKIS, I. ; V. AKÇELIK ; O. GHATTAS ; J. BIELAK.** A Newton-CG method for large-scale three-dimensional elastic full-waveform seismic inversion. *Inverse Problems,* June 2008, vol. 24 (3), 034015
- **BJÖRCK, Å. ; T. ELFVING.** Accelerated projection methods for computing pseudoinverse solutions of systems of linear equations. *BIT,* 1979, vol. 19 (2), 145-163

- **GORDON, DAN ; RACHEL GORDON.** Robust and highly scalable parallel solution of the Helmholtz equation with large wave numbers. *Journal of Computational and Applied Mathematics,* January 2013, vol. 237 (1), 182-196
- **CENSOR, YAIR ; PAUL P. B. EGGERMONT ; DAN GORDON.** Strong underrelaxation in Kaczmarz's method for inconsistent systems. *Numerische Mathematik,* February 1983, vol. 41 (1), 83-92
- **AVRON, HAIM ; SIVAN TOLEDO.** Randomized algorithms for estimating the trace of an implicit symmetric positive semi-definite matrix. *Journal of the ACM (JACM),* 2011, vol. 58.2, 8
- **FRIEDLANDER, MICHAEL P. ; MARK SCHMIDT.** Hybrid Deterministic-Stochastic Methods for Data Fitting. *SIAM Journal on Scientific Computing,* May 2012, vol. 34 (3), A1380-A1405
- **CLARKSON, K. L. ; DRINEAS, P. ; MAGDON-IS-MAIL, M. ; MAHONEY, M. W. ; MENG, X. ; WOODRUFF, D. P.** The Fast Cauchy Transform and Faster Robust Linear Regression. *SODA,* 466-477
- **YI LI ; HU L. NGUYEN ; DAVID P. WOODRUFF.** *On Sketching Matrix Norms and the Top Singular Vector,* 2014
- **ARAVKIN, A. Y. ; T. VAN LEEUWEN.** Estimating nuisance parameters in inverse problems. *Inverse Problems,* 2012, vol. 28 (11), 115016